(19) **Europäisches Patentamt European Patent Office Office européen des brevets**

(11) **EP 4 377 042 B1**

(12) **FASCICULE DE BREVET EUROPEEN**

(45) Date de publication et mention
de la délivrance du brevet:
**23.07.2025 Bulletin 2025/30**

(21) Numéro de dépôt: **21749891.4**

(22) Date de dépôt: **28.07.2021**

(51) Classification Internationale des Brevets (IPC):
**B23K 26/03** (2006.01)    **B23K 26/06** (2014.01)
**B23K 26/0622** (2014.01)    **B23K 26/082** (2014.01)
**B23K 26/08** (2014.01)    **B23K 26/16** (2006.01)
**B23K 26/362** (2014.01)    **C23G 1/00** (2006.01)
**C23G 5/00** (2006.01)    **B21B 45/04** (2006.01)
**B23K 26/00** (2014.01)    **B23K 26/352** (2014.01)
**B23K 26/40** (2014.01)    **B23K 101/16** (2006.01)
**B23K 103/04** (2006.01)    **C21D 1/82** (2006.01)
**C21D 8/02** (2006.01)    **C21D 9/56** (2006.01)

(52) Classification Coopérative des Brevets (CPC):
**B21B 45/04; B23K 26/0006; B23K 26/032;
B23K 26/0604; B23K 26/0622; B23K 26/082;
B23K 26/0846; B23K 26/352; B23K 26/362;
B23K 26/40; C21D 1/82; C21D 8/0236;
C21D 8/0278; C21D 9/56; C23G 5/00;**    (Cont.)

(86) Numéro de dépôt international:
**PCT/IB2021/056864**

(87) Numéro de publication internationale:
**WO 2023/007221 (02.02.2023 Gazette 2023/05)**

(54) **PROCÉDÉ ET INSTALLATION DE DÉCAPAGE D'UNE COUCHE D'OXYDE D'UN PRODUIT MÉTALLIQUE**

VERFAHREN UND VORRICHTUNG ZUM ENTFERNEN EINER OXIDSCHICHT VON EINEM METALLPRODUKT

METHOD AND APPARATUS FOR STRIPPING AN OXIDE LAYER FROM A METAL PRODUCT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(43) Date de publication de la demande:
**05.06.2024 Bulletin 2024/23**

(73) Titulaire: **Aperam**
**1882 Luxembourg (LU)**

(72) Inventeurs:
• **GUILLOTTE, Ismaël, Romaric, Alexis**
**62131 Verquin (FR)**
• **LATOUCHE, Baptiste, Pierre, Jean**
**59800 Lille (FR)**
• **LOPES, Marcos Vinicius Oliveira**
**62113 Labourse (FR)**

(74) Mandataire: **Lavoix**
**2, place d'Estienne d'Orves**
**75441 Paris Cedex 09 (FR)**

(56) Documents cités:
**WO-A1-2018/096382    CN-A- 107 081 312
KR-B1- 102 272 649**

(52) Classification Coopérative des Brevets (CPC):
     (Cont.)B23K 2101/16; B23K 2103/05

## Description

La présente invention concerne un procédé et une installation de décapage d'une couche d'oxyde recouvrant une surface d'un produit métallique, notamment en acier, après que celui-ci ait subi des expositions à une atmosphère oxydante pour certains de ses composants, par exemple lors d'un séjour dans un four de traitement thermique.

Dans la suite du texte, on prendra comme exemple privilégié d'application de l'invention le domaine des bandes et tôles d'acier inoxydable de toutes catégories (austénitiques, ferritiques, austéno-ferritiques...), laminées ou formées à chaud ou à froid. Mais il doit être entendu que cela ne sera absolument pas limitatif, et que l'invention pourra s'appliquer à d'autres métaux pour lesquels se posent des problèmes techniques analogues à ceux rencontrés sur les bandes et tôles d'acier inoxydable, notamment aux diverses classes d'aciers au carbone, et alliages spéciaux, notamment ferreux. Elle pourra aussi s'appliquer à d'autres produits que des bandes et tôles, par exemple à des fils et à des tubes avec et sans soudure, avec des adaptations des installations décrites qui seraient évidentes pour l'homme du métier.

Il est habituel que les tôles et bandes d'acier inoxydable subissent des traitements qui conduisent à ce qu'une couche d'oxyde indésirable se forme à haute température sur leurs surfaces, au contact d'une atmosphère oxydante telle que l'air. Ces oxydes ont une composition qui varie sensiblement selon la composition du métal de base et les conditions de leur formation. Le plus habituellement, les oxydes des éléments Fe, Cr, Mn et Si y sont prépondérants.

Les traitements qui conduisent à cette formation sont, typiquement, et non limitativement, les réchauffages que subit un demi-produit (lingot, brame, bloom, billette) avant son laminage à chaud et le séjour à l'air libre qu'il effectue après le laminage à chaud, et les divers recuits à plusieurs centaines de degrés que subit la bande ou la tôle avant et/ou pendant et/ou après son cycle de laminage à froid (celui-ci étant effectué en une ou plusieurs étapes, dont certaines peuvent être séparées par un recuit intermédiaire), si ces recuits ont lieu dans une atmosphère qui n'est pas parfaitement inerte ou réductrice. Ces oxydes indésirables doivent bien entendu être éliminés, avant que la tôle ou la bande ne devienne un produit utilisable ou un demi-produit prêt à subir les ultimes opérations de mise en forme qui en feront un produit utilisable. Il est aussi, souvent, important d'éliminer ces oxydes avant la première étape de laminage à froid, pour éviter qu'ils ne s'incrustent dans la surface du demi-produit pendant le laminage et ne conduisent à un état de surface médiocre.

Il doit être entendu que la couche d'oxyde indésirable dont on parle ici n'est pas la fine couche à base d'oxydes de Cr (dite « couche passive ») qui se forme spontanément à l'air et à température ambiante à la surface des aciers inoxydables, et qui les protège de l'oxydation. La couche d'oxyde qui pose problème, et que l'on veut éliminer, est celle qui se forme pendant des séjours de la bande à haute température en atmosphère oxydante. Une fois cette couche enlevée, la surface de l'acier inoxydable est mise à nu et la couche passive protectrice d'oxydes de Cr peut se former à nouveau, de façon rapide et spontanée, rendant l'acier de nouveau inoxydable dans des conditions d'utilisation habituelles.

L'utilisation d'un décalaminage mécanique par grenaillage (projection de billes dures sur la surface à traiter) et/ou par un brise-oxydes (passage de la bande entre des paires de rouleaux qui la font travailler en flexion, compression et traction) permet de fissurer et d'enlever aisément, par exemple par brossage, une grande partie des oxydes, mais peut être insuffisante pour en enlever la totalité. Le grenaillage a aussi l'inconvénient d'augmenter la rugosité de la surface, ce que les opérations ultérieurement subies par la tôle ou la bande ne permettent pas forcément de corriger lorsque cela n'est pas désiré.

Le plus classiquement, la couche d'oxyde indésirable est enlevée au moyen d'un procédé de décapage chimique ou électrolytique, ou d'une succession de tels décapages.

Le décapage chimique est réalisé dans un ou plusieurs bains d'acide fluorhydrique, chlorhydrique, sulfurique ou nitrique. Le décapage électrolytique est réalisé typiquement dans un bain de sulfate de sodium ou un bain acide (nitrique ou sulfurique).

Ces décapages conduisent à l'obtention d'une bande ou d'une tôle présentant un fini de surface que l'on classe habituellement dans diverses catégories faisant l'objet de normes :

- Fini 1D, pour des produits ayant subi un laminage à chaud, un recuit et un décapage, généralement un décapage chimique ; un décapage mécanique (brise oxyde, grenaillage) est généralement également utilisé en amont du décapage chimique ;
- Fini 2B, pour des produits ayant subi un recuit, un décapage généralement électrolytique et chimique et un passage au skin-pass (laminoir écrouisseur qui améliore la planéité de la bande et diminue sa rugosité, avec un faible taux de réduction de l'épaisseur du produit qui est de l'ordre de quelques % en principe) ;
- Fini 2D pour des produits laminés à froid ayant subi un recuit, un décapage et pas de skin-pass ;
- Fini 2E pour des produits laminés à froid ayant subi un recuit, un grenaillage, un décapage et pas de skin-pass.

Le décapage chimique est le procédé le plus radical pour éliminer les oxydes indésirables. Mais il présente de nombreux inconvénients.

Il consomme des quantités élevées d'acides, avec, au plus, de très faibles possibilités d'en récupérer une partie pour les réutiliser ultérieurement.

Les infrastructures nécessaires à son exécution, à savoir les bains de décapage successifs et leurs annexes, sont coûteuses et encombrantes. Il n'est pas rare de rencontrer des installations de décapage chimique de bandes en défilement dont la longueur est de l'ordre de 200 m.

Ces installations utilisent des produits dangereux, en particulier l'acide fluorhydrique. Leurs rejets polluants liquides et solides (boues renfermant les oxydes mélangés aux liquides de décapage) doivent être stockés et retraités selon une règlementation stricte dont la sévérité ne pourra que s'accroître dans l'avenir, ce qui est coûteux. Les bains d'acide, chauffés, dégagent également des vapeurs acides qu'il faut neutraliser. L'acide nitrique est aussi une source de dégagements de NOx qu'il faut capter et traiter.

On utilise aussi des procédés de décapage électrolytique, effectués alors que la bande ou la tôle plonge dans un bain généralement à base de sulfate de sodium, ou d'acide nitrique ou sulfurique, qui doit aussi être retraité après usage. Le décapage électrolytique nécessite une installation assez coûteuse utilisant une quantité relativement importante d'énergie électrique. Il peut être complété par un décapage chimique à l'acide, plus léger que lorsqu'un décapage chimique seul est utilisé, mais qui présente le même type d'inconvénients que ceux cités plus haut. Le décapage électrolytique produit, lui aussi, des boues qu'il faut stocker puis retraiter. Les bains usés doivent être retraités. Les retraitements des boues et des bains sont moins coûteux, dangereux et complexes que dans le cas d'un décapage chimique par bains d'acides, mais constituent quand même, là aussi, une contrainte très significative dans l'utilisation du procédé.

Enfin la présence de chrome hexavalent en solution dans les liquides de décapage représente un risque fort pour la santé du personnel et pour l'environnement : ses teneurs dans les liquides et l'exposition du personnel sont mesurées et suivies.

On a donc examiné des possibilités de remplacer, au moins dans certains cas, le décapage chimique ou électrolytique des produits métalliques par des procédés faisant usage d'un laser. L'ouvrage classique « Laser Cleaning » (Boris Luk'yanchuk, Décembre 2002, ISBN: 978-981-02-4941-0) évoque de telles possibilités, notamment pour le nettoyage des oeuvres d'art et des bâtiments (notamment son chapitre 2 « an overview of experimental research into the laser cleaning of contaminants from surfaces), donc pour des surfaces fixes de tailles relativement réduites. Le rayon laser est projeté sur la surface à nettoyer et provoque le détachement de la couche d'oxyde.

De cette façon, on évite de faire appel à des acides et/ou à des sulfates, et il n'y a plus de retraitements de boues et de liquides polluants et dangereux à effectuer. On n'a qu'à recueillir les oxydes détachés, par exemple par aspiration, et on a la possibilité de les retraiter, de préférence par voie sèche, pour en récupérer les métaux qu'ils contiennent et les valoriser. La sécurité du personnel et de l'environnement de l'atelier est mieux assurée. L'ensemble de l'opération de nettoyage de la surface par laser présente aussi un meilleur bilan énergétique global que par voie humide (chimique et/ou électrolytique), d'autant que le coût en électricité du fonctionnement des lasers n'est pas très élevé, en particulier par rapport à ce qui est nécessaire pour un décapage électrolytique. L'installation peut être nettement plus compacte qu'une installation de décapage comportant plusieurs bains successifs, d'où des avantages clairs sur le coût des opérations de génie civil lors de la construction de l'installation. Si on utilise des lasers pulsés, il est possible d'envoyer des quantités d'énergie élevées dans un temps très court, à une haute fréquence et avec une grande autonomie, et la durée de vie de ces lasers peut atteindre plusieurs années sans entretien particulier.

Cependant, l'utilisation des technologies déjà existantes, couplées à des lasers CO2 ou excimer, ne permet pas d'obtenir un résultat optimum sur des bandes ou tôles en défilement de format industriel, à cause d'une maintenance lourde, d'un mode de fonctionnement des lasers continu ou à pulses trop longs et d'un coût de fonctionnement trop élevé dû au nombre de lasers utilisés, compte tenu de la vitesse de défilement élevée des lignes actuelles. Par ailleurs les solutions apportées sont des solutions supposant un état de surface homogène selon la largeur et la longueur de la bande (voir le document EP 0 927 595-A1) et, le plus souvent, une vitesse de défilement fixe. Sur une même bande, si la vitesse de défilement venait à changer pour une raison spécifique, l'inertie des machines, et principalement celle du four, entraîne une modification (en épaisseur et/ou en nature) de la couche d'oxyde. Même si la nature et l'épaisseur de la couche d'oxyde à retirer étaient au préalable considérées comme connues, celles-ci sont alors modifiées et une adaptation de la fréquence ou de l'énergie des pulses en fonction de la vitesse ne fonctionne que si la couche d'oxyde ne change pas (ce qui n'est pas le cas en général). Enfin les vitesses de ligne atteignent dorénavant environ 100-150 m/min.

On connaît du document EP3631049 A1 un procédé de décapage d'une couche d'oxyde dans lequel la composition de la couche d'oxyde ainsi que son épaisseur sont déterminés par spectroscopie de plasma induit par laser.

Cette technique n'est pas satisfaisante, dans la mesure où elle nécessite un endommagement du métal présent sous la couche d'oxyde. En outre, la détermination de l'épaisseur et de la composition de la couche d'oxyde ne permet pas de déterminer de manière fiable quels paramètres de décapage doivent être utilisés pour décaper la couche d'oxyde.

Le document KR 102 272 649 B1 divulgue un appareil de nettoyage laser comprenant une fonction d'inspection de la qualité du travail et un procédé d'utilisation dudit appareil de nettoyage. Le document CN 107 081 312 divulgue un dispositif de nettoyage laser et un procédé de nettoyage laser pour le décapage laser de l'acier, le dispositif et le procédé comprenant une fonction d'inspection de la qualité du décapage achevée.

On connait par ailleurs du document WO2018/096382 un procédé et une installation de décapage par laser de produits métalliques.

Selon ce procédé, on détermine l'émissivité de la surface oxydée du produit métallique à décaper en émettant un rayon sur cette surface au moyen d'un premier laser, en interceptant les rayons réfléchis par la surface oxydée, et en analysant ces rayons réfléchis. Les paramètres de fonctionnement des lasers de décapage sont alors adaptés en fonction de l'émissivité ainsi déterminée.

Ce procédé permet d'adapter l'énergie émise par les lasers de décapage pour décaper effectivement la couche d'oxyde présente à la surface.

Ce procédé n'est cependant pas entièrement satisfaisant, dans la mesure où l'émissivité ne permet pas toujours de déterminer les paramètres adéquats pour un décapage efficace de la couche d'oxyde.

Un but de l'invention est donc de proposer un procédé et une installation de décapage de produits métalliques en défilement permettant d'obtenir un décapage efficace à une échelle industrielle.

L'invention est définie par la revendication de procédé indépendante 1 et la revendication d'appareil indépendante 11.

A cet effet, l'invention a pour objet un procédé de décapage d'un produit métallique en défilement présentant à sa surface une couche d'oxyde, ledit procédé utilisant un décapage par laser au moyen d'au moins un laser de décapage, le procédé comprenant les étapes suivantes, mises en oeuvre successivement sur chaque section d'une pluralité de sections consécutives du produit en défilement :

- détermination d'un seuil de densité d'énergie d'expulsion de la couche d'oxyde sur la section considérée dudit produit métallique en défilement, correspondant à une densité d'énergie minimale nécessaire à l'expulsion de la couche d'oxyde sur la section considérée, comprenant :

   émission de pulses laser d'analyse par un système d'émission comprenant une source laser, les pulses laser d'analyse étant de longueur d'onde égale et de durée de pulse égale à celles du ou des lasers de décapage, sur une portion de ladite section considérée, pour former, au sein de ladite portion, une zone décapée dépourvue de la couche d'oxyde,
   capture d'une image de la portion de la surface impactée par lesdits pulses laser d'analyse,
   détermination, à partir de ladite image, d'une dimension représentative de la zone décapée,
   évaluation, à partir de ladite dimension représentative et d'informations relatives au profil en énergie des pulses laser d'analyse, du seuil de densité d'énergie d'expulsion de la couche d'oxyde,

- émission par le laser de décapage de pulses laser de décapage sur la section considérée pour la décaper, la densité d'énergie des pulses de décapage étant supérieure au seuil de densité d'énergie d'expulsion de la couche d'oxyde déterminé,

le laser de décapage étant commandé par une unité de pilotage recevant le seuil de densité d'énergie d'expulsion de la couche d'oxyde déterminé de telle sorte que chaque point de la section considérée soit exposé en au moins un instant à une densité d'énergie supérieure au seuil de densité d'énergie d'expulsion de la couche d'oxyde.

Selon d'autres aspects avantageux de l'invention, le procédé comprend une ou plusieurs des caractéristiques suivantes, prises isolément ou suivant toutes les combinaisons techniquement possibles :

- l'émission des pulses laser d'analyse forme, au sein de ladite portion, une zone endommagée, sur laquelle le métal sous-jacent à la couche d'oxyde a été endommagé, et le procédé comprend en outre la détermination, à partir de ladite image, d'une dimension représentative de la zone endommagée et l'évaluation, à partir de la dimension représentative de la zone endommagée et des informations relatives au profil en énergie des pulses laser d'analyse, d'un seuil de densité d'énergie d'endommagement du métal, correspondant à la densité d'énergie au-dessus de laquelle une dégradation de la surface du produit métallique, sous la couche d'oxyde, est constatée ;
- le procédé comprend en outre une transmission du seuil de densité d'énergie d'endommagement au système d'émission, et, sur la section suivante du produit métallique en défilement, le système d'émission émet un pulse laser d'analyse d'énergie adaptée de telle sorte qu'en tout point de la portion impactée par les pulses lasers d'analyse, la densité d'énergie soit inférieure au seuil de densité d'énergie d'endommagement ;
- les informations relatives au profil en énergie comprennent la forme du profil en énergie et l'énergie ou la puissance des pulses laser d'analyse ;
- l'étape de détermination du seuil de densité d'énergie d'expulsion de la couche d'oxyde comprend la détermination de la forme du profil en énergie des pulses laser d'analyse et/ou la détermination de l'énergie ou la puissance des pulses laser d'analyse ;
- l'étape de détermination du seuil de densité d'énergie d'expulsion de la couche d'oxyde comprend la détermination de la forme du profil en énergie des pulses laser d'analyse, comprenant la déviation d'une partie de chaque pulse laser d'analyse vers un analyseur de faisceau et l'évaluation de la forme du profil en énergie par l'analyseur de faisceau ;

- l'étape de détermination du seuil de densité d'énergie d'expulsion de la couche d'oxyde comprend la détermination de l'énergie et/ou de la puissance des pulses laser d'analyse, comprenant la déviation d'une partie de chaque pulse laser d'analyse vers un puissancemètre, et l'évaluation de l'énergie et/ou de la puissance du pulses laser d'analyse par le puissancemètre ;

- l'étape de détermination du seuil de densité d'énergie d'expulsion de la couche d'oxyde comprend la détermination de la forme du profil en énergie et/ou de l'énergie ou la puissance de pulses lasers auxiliaires émis par le système d'émission, les pulses lasers auxiliaires étant distincts des pulses lasers d'analyse ;

- la détermination de la forme du profil en énergie et/ou de l'énergie ou la puissance des pulses lasers auxiliaires comprend :

   l'émission des pulses lasers auxiliaires par le système d'émission,
   l'orientation des pulses lasers auxiliaires vers un analyseur de faisceau et/ou vers un puissancemètre au moyen d'un dispositif de balayage à miroir galvanométrique ,
   l'évaluation de la forme du profil en énergie des pulses laser auxiliaires par l'analyseur de faisceau et/ou l'évaluation de l'énergie et/ou de la puissance des pulses laser auxiliaires par le puissancemètre ;

- le produit métallique est une bande, une barre, une feuille, une plaque, un tube ou un fil.

L'invention a également pour objet une installation de décapage Installation de décapage laser d'un produit métallique en défilement présentant à sa surface une couche d'oxyde au moyen d'au moins un laser de décapage, caractérisée en ce qu'elle comporte:

- un ensemble de détermination configuré pour déterminer, sur chacune d'une pluralité de sections successives du produit métallique en défilement, un seuil de densité d'énergie d'expulsion de la couche d'oxyde, correspondant à une densité d'énergie minimale nécessaire à l'expulsion de la couche d'oxyde sur la section considérée, l'ensemble de détermination comprenant :

   un système d'émission comprenant une source laser, le système d'émission étant configuré pour émettre, sur une portion de ladite section considérée, des pulses laser d'analyse de longueur d'onde et de durée de pulse égales à celles du ou des lasers de décapage, pour former, au sein de ladite portion, une zone décapée dépourvue de la couche d'oxyde,
   un système d'acquisition d'images configuré pour acquérir une image de la portion impactée par les pulses laser d'analyse, lors du défilement du produit,
   un système de traitement configuré pour déterminer, à partir de chaque image acquise par le système d'acquisition d'images, une dimension représentative de la zone décapée et pour évaluer, à partir de ladite dimension représentative et d'informations relatives au profil en énergie des pulses laser d'analyse, le seuil de densité d'énergie d'expulsion de la couche d'oxyde,

- un ensemble de décapage laser comprenant au moins un laser de décapage configuré pour émettre des pulses laser de décapage sur chacune de la pluralité de sections successives du produit métallique en défilement pour la décaper, et une unité de pilotage configurée pour recevoir le seuil de densité d'énergie d'expulsion de la couche d'oxyde pour cette section considérée et pour commander l'émission, par le ou les lasers de décapage, de pulses laser d'énergie supérieure au seuil de densité d'énergie d'expulsion de la couche d'oxyde de telle sorte que chaque point de la section considérée soit exposé en au moins un instant à une densité d'énergie supérieure au seuil de densité d'énergie d'expulsion de l'oxyde.

Selon d'autres aspects avantageux de l'invention, l'installation comprend une ou plusieurs des caractéristiques suivantes, prises isolément ou suivant toutes les combinaisons techniquement possibles :

- les pulses laser d'analyse sont adaptés pour former, au sein de ladite portion, une zone endommagée, sur laquelle le métal sous-jacent à la couche d'oxyde a été endommagé par les pulses laser d'analyse, et le système de traitement est configuré pour déterminer, à partir de ladite image, une dimension représentative de la zone endommagée et pour évaluer, à partir de la dimension représentative de la zone endommagée et des informations relatives au profil en énergie des pulses laser d'analyse, un seuil de densité d'énergie d'endommagement du métal, correspondant à la densité d'énergie au-dessus de laquelle une dégradation de la surface du produit métallique, sous la couche d'oxyde, est constatée ;
- le système de traitement est configuré pour transmettre au système d'émission le seuil de densité d'énergie d'endommagement, et le système d'émission est configuré pour adapter l'énergie du pulse laser d'analyse en fonction du seuil de densité d'énergie d'endommagement de telle sorte qu'en tout point de la portion impactée de la section suivante du produit en défilement, la densité d'énergie soit inférieure au seuil de densité d'énergie d'endommagement ;

- les informations relatives au profil en énergie comprenant la forme du profil en énergie et l'énergie ou la puissance des pulses laser d'analyse ;

- l'installation de décapage laser comprend un système de détermination de la forme du profil en énergie des pulses laser d'analyse et/ou un système de détermination de l'énergie ou la puissance des pulses laser d'analyse ;

- le système de détermination de la forme du profil en énergie des pulses laser d'analyse comprend un analyseur de faisceau et un dispositif optique, notamment une lame séparatrice, configuré pour dévier une partie de chaque pulse laser d'analyse vers l'analyseur de faisceau, l'analyseur de faisceau étant configuré pour évaluer la forme du profil en énergie à partir de la partie du pulse laser d'analyse déviée ;

- le système de détermination de l'énergie ou de la puissance des pulses laser d'analyse comprend un puissancemètre et un dispositif optique, notamment une lame séparatrice, configuré pour dévier une partie de chaque pulse laser d'analyse vers le puissancemètre, le puissancemètre étant configuré pour évaluer l'énergie et/ou la puissance des pulses laser d'analyse à partir de la partie du pulse laser d'analyse déviée ;

- les informations relatives au profil en énergie comprenant la forme du profil en énergie et l'énergie ou la puissance des pulses laser d'analyse, l'installation de décapage laser comprend un système de détermination de la forme du profil en énergie et/ou de l'énergie ou la puissance de pulses lasers auxiliaires émis par le système d'émission, les pulses lasers auxiliaires étant distincts des pulses lasers d'analyse ;

- pour traiter l'ensemble de la surface dudit produit métallique qui consiste en une bande, une barre, un tube, une feuille, une plaque ou un fil, elle comporte, répartis au voisinage dudit produit métallique, un groupe de sources laser et un groupe de lasers de décapage.

L'invention concerne également une ligne de traitement continue d'un produit métallique comprenant une installation de décapage selon l'invention.

L'invention sera mieux comprise à la lecture de la description qui suit, donnée en référence aux figures annexées, parmi lesquelles :

- La Figure 1 illustre schématiquement, de profil, une ligne continue comprenant une installation de décapage laser selon un mode de réalisation de l'invention ;

- Les Figures 2 à 4 illustrent trois exemples de profils d'énergie 34, 35, 36 de pulses laser;

- Les Figures 5 à 7 illustrent trois exemples d'aspects de surface résultant de l'émission de pulses laser ayant les profils en énergie illustrés sur les Figures 2 à 4 respectivement ;

- La Figure 8 illustre schématiquement une partie d'une installation de décapage selon un deuxième mode de réalisation;

- La Figure 9 illustre un détail de l'installation de décapage de la Figure 8 ;

- La Figure 10 illustre schématiquement une partie d'une installation de décapage selon un troisième mode de réalisation.

Les installations de décapage laser qui vont être décrites en détail et illustrées par des exemples le seront en référence au traitement d'une bande d'acier inoxydable laminée à froid en défilement, venant de subir un laminage à froid et un recuit sur une ligne continue, et l'installation de décapage laser selon l'invention, qui assure au moins l'essentiel de cette fonction de décapage, est également intégrée à cette ligne continue, en remplacement ou en amont des installations de décapage électrolytique et/ou chimique habituellement utilisées sur ce type de ligne continue (on peut trouver des exemples de telles lignes continues notamment dans les documents EP 0 509 177-A2 et EP 0 695 808-A1).

Il va de soi que l'installation de décapage laser selon l'invention qui sera décrite peut aussi être intégrée à une ligne de traitement continue comportant plus ou moins d'appareillages que ce qui va être décrit, ou faire l'objet d'une installation séparée spécialement dédiée à ce décapage.

Egalement, on n'a pas représenté les appareillages habituellement présents sur de telles lignes qui n'ont pas de rôle métallurgique majeur et, en tout cas, n'interviennent pas en tant que tels dans la conduite du décapage laser réalisé selon l'invention. On peut notamment citer des rouleaux pinceurs pour la mise en défilement de la bande, et des accumulateurs de bande qui servent de « tampons » entre certains des appareillages qui peuvent nécessiter chacun une vitesse de défilement de la bande différente.

La ligne continue représentée comporte d'abord une installation de débobinage 1 d'une bobine 2 d'une bande 3 d'acier inoxydable laminée à chaud dont l'épaisseur est typiquement de l'ordre de quelques dixièmes de mm ou de quelques mm et dont la largeur peut aller typiquement jusqu'à 2 m. Cette bande 3 est mise en défilement à une vitesse allant typiquement jusqu'à 150 m/min, et, généralement après avoir été décapée par des moyens quelconques chimiques et/ou mécaniques non représentés, ou même par laser avec des moyens selon l'invention tels qu'on va les décrire, elle passe dans un laminoir à froid 4, qui réduit son épaisseur à une valeur qui est typiquement de l'ordre de 0,2 à 15 mm afin d'obtenir une bande laminée à froid.

La bande 3 laminée à froid passe ensuite dans un four de recuit 5, où elle est portée à une température de plusieurs centaines de degrés, cette température étant adaptée en fonction des objectifs métallurgiques du recuit. Si ce recuit est effectué (délibérément ou accidentellement) en présence d'une quantité non négligeable d'un gaz oxydant tel que l'oxygène, il conduit à la formation d'une couche d'oxyde indésirable à la surface de la bande 3, dont la composition, l'épaisseur et l'adhérence sur la bande 3 dépendent notamment de la composition de la bande 3, de la composition de l'atmosphère du four 5, de la température dans le four 5, du temps de séjour de la bande 3 dans le four 5. Compte tenu de ces nombreux paramètres qui ne sont pas tous aisément maîtrisables et qui, de toute façon, peuvent sensiblement varier selon le traitement précis effectué (notamment la composition de la bande 3 et les conditions de recuit), ainsi que des aléas de production, on ne peut pas assigner des caractéristiques systématiques précises à cette couche d'oxyde qui permettraient une standardisation aisée des conditions de décapage de la bande 3. C'est aussi l'un des inconvénients des procédés de décapage par voie humide, notamment chimique, dont la composition des bains ne peut être aisément adaptée à ce qui serait réellement nécessaire pour obtenir un décapage satisfaisant de la bande 3 au moindre coût.

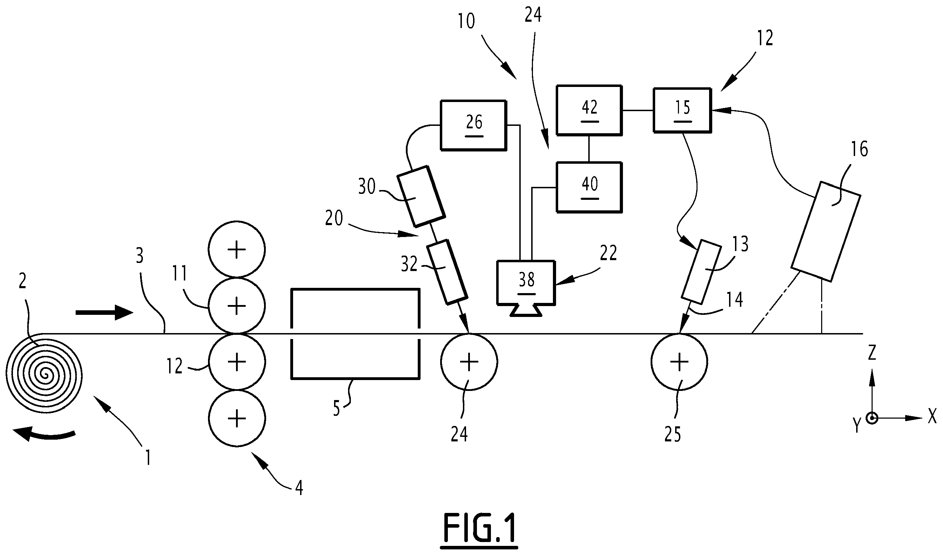

Selon le mode de réalisation de la Figure 1, l'installation de décapage laser est disposée sur la ligne après le four de recuit 5.

L'installation de décapage laser comporte un ensemble de détermination 10 d'un seuil de densité d'énergie et un ensemble 12 de décapage laser.

L'ensemble de détermination 10 du seuil de densité d'énergie est destiné à évaluer la densité d'énergie effective nécessaire au décapage de la couche d'oxyde sur la bande en défilement. En effet il est possible, du fait des variations volontaires ou subies, des paramètres opératoires en amont de la ligne, par exemple des ralentissements, des accélérations de la bande sur la ligne, ou encore une pollution hétérogène sur la largeur de la bande 3 qui est survenue dans le four 5, avant ou après celui-ci, d'obtenir une couche d'oxyde hétérogène sur la longueur et/ou la largeur de la bande 3 à décaper.

L'ensemble de détermination 10 du seuil de densité d'énergie est destiné à déterminer, lors du défilement du produit métallique à décaper, une valeur minimale ou seuil de densité d'énergie, appelé par la suite seuil de densité d'énergie d'expulsion de l'oxyde $S_{exp}$, correspondant à la densité d'énergie minimale devant être émise par l'ensemble 12 de décapage laser sur le produit afin de décaper la couche d'oxyde présente sur la surface du produit. De préférence, l'ensemble de détermination 10 du seuil de densité d'énergie est en outre configuré pour déterminer un seuil maximal de densité d'énergie laser, appelé par la suite seuil de densité d'énergie d'endommagement $S_{end}$, au-dessus de laquelle une dégradation de la surface du produit, i.e. du métal, sous la couche d'oxyde, est constatée.

L'ensemble de détermination 10 est configuré pour déterminer le seuil de densité d'énergie d'expulsion de l'oxyde $S_{exp}$, et, le cas échéant, le seuil de densité d'énergie d'endommagement $S_{end}$, successivement sur une pluralité de sections de la surface du produit.

Une section est par exemple une bande transversale de longueur donnée dans la direction de défilement du produit (appelée également direction longitudinale) et de largeur égale à celle du produit. On appellera une telle bande « bande élémentaire », par opposition au produit 3 lorsqu'il est sous forme de bande. Les sections sont alors destinées à être décapées l'une après l'autre par l'ensemble 12 de décapage laser, au fur et à mesure de leur passage devant l'ensemble 12 de décapage laser.

De préférence, comme décrit ci-après, l'ensemble de détermination 10 est configuré pour déterminer le seuil de densité d'énergie d'expulsion de l'oxyde $S_{exp}$ et le cas échéant le seuil de densité d'énergie d'expulsion de l'oxyde $S_{exp}$ sur une portion de chaque section, le ou les seuil(s) ainsi déterminé(s) étant alors considéré(s) comme représentatif(s) de l'ensemble de la section considérée.

Par exemple, une section étant une bande élémentaire transversale de longueur donnée dans la direction de défilement du produit et de largeur égale à celle du produit, l'ensemble de détermination 10 est configuré pour déterminer le seuil de densité d'énergie d'expulsion de l'oxyde $S_{exp}$ et le cas échéant le seuil de densité d'énergie d'expulsion de l'oxyde $S_{exp}$ sur une portion de cette bande élémentaire, le ou les seuil(s) ainsi déterminés étant alors considérés comme représentatifs de l'ensemble de la bande élémentaire.

L'ensemble 12 de décapage laser est destiné à émettre des rayons laser sur le produit en défilement afin de décaper la couche d'oxyde, en fonction du ou des seuil(s) de densité d'énergie déterminé(s) par l'ensemble de détermination 10.

En particulier, l'ensemble 12 de décapage laser est destiné à émettre des rayons laser sur chaque section du produit en défilement afin de décaper la couche d'oxyde, en fonction du ou des seuil(s) de densité d'énergie déterminé(s) par l'ensemble de détermination 10 pour cette section.

L'ensemble de détermination 10 du seuil de densité d'énergie comprend un système d'émission 20 de pulses laser, un système d'acquisition d'images 22, un système de traitement 24 et un contrôleur 26.

Le système d'émission 20 de pulses laser est configuré pour émettre, sur le produit en défilement, un faisceau de pulses laser d'une longueur d'onde et de durée de pulse égales à celle des lasers qui seront utilisés pour le décapage (par exemple des lasers Nd:YAG de longueur d'onde 1064 nm). Ces pulses laser seront également appelés par la suite pulses laser d'analyse.

Le système d'émission 20 de pulses laser comprend au moins une source laser 30 propre à émettre de tels pulses laser d'analyse. La source laser 30 est propre à émettre des pulses laser d'une longueur d'onde et d'une durée de pulse égales à celle des lasers qui seront utilisés pour le décapage.

Le fait que la longueur d'onde et la durée de pulse de la source laser 30 soit les mêmes que celles des lasers de décapage permet de s'assurer que les absorptions des rayons de la source laser 30 par les oxydes recouvrant le produit seront les mêmes que pour les lasers de décapage, et que les réglages des lasers de décapage pourront donc être fondés directement sur les données obtenues par l'ensemble de détermination 10 du seuil de densité d'énergie.

De préférence, la source laser 30 est montée mobile par rapport à la ligne, en particulier mobile dans une direction parallèle à la surface du produit et orthogonal à la direction de défilement du produit (c'est-à-dire mobile selon la largeur du produit). Il est ainsi possible de faire varier, le long de la largeur du produit, la localisation de la portion du produit impactée par la source laser lors du défilement. A cette fin, le système d'émission 20 de pulses laser comprend par exemple un dispositif de balayage, propre à déplacer la source laser transversalement au produit en défilement. En variante, l'ensemble de détermination 10 est entièrement mobile par rapport à la ligne, ce qui permet également de faire varier, le long de la largeur du produit, la localisation de la portion du produit impactée par la source laser lors du défilement.

Par exemple, si chaque section considérée est une bande élémentaire de largeur égale à celle du produit à décaper, le dispositif de balayage est propre à déplacer la source laser transversalement au produit en défilement de telle sorte que la localisation de la portion du produit impactée par la source laser varie au cours du temps sur la largeur du produit 3.

Le système d'émission 20 de pulses laser comprend également un dispositif optique 32 configuré pour focaliser les pulses lasers émis par la source laser 30 sur la surface du produit en défilement.

La source laser 30 est configurée pour émettre un pulse laser d'analyse sur une portion de la section considérée de la surface du produit en défilement, dont la densité d'énergie varie en fonction de la position sur cette portion. Ainsi, la densité d'énergie reçue en chaque point de la portion impactée dépendra de la position de ce point. On appellera par la suite « spot » la zone de la surface du produit impactée par le pulse laser d'analyse.

Par exemple, en certains points, la densité d'énergie reçue sera trop faible pour décaper la couche d'oxyde, tandis qu'en d'autres points, la densité d'énergie sera suffisante pour décaper la couche d'oxyde, tout en restant insuffisante pour endommager le métal sous la couche d'oxyde. Dans certains cas, la densité d'énergie reçue en certains points peut être suffisante pour, à la fois, décaper la couche d'oxyde et endommager le métal présent sous cette couche.

La densité d'énergie reçue en chaque point de la portion impactée est caractérisée par le profil de densité d'énergie, ou plus simplement profil en énergie, du pulse.

Le profil en énergie associe ainsi à chaque position, ou à une pluralité de positions, dans le plan de la surface du produit, une densité d'énergie émise en cette position.

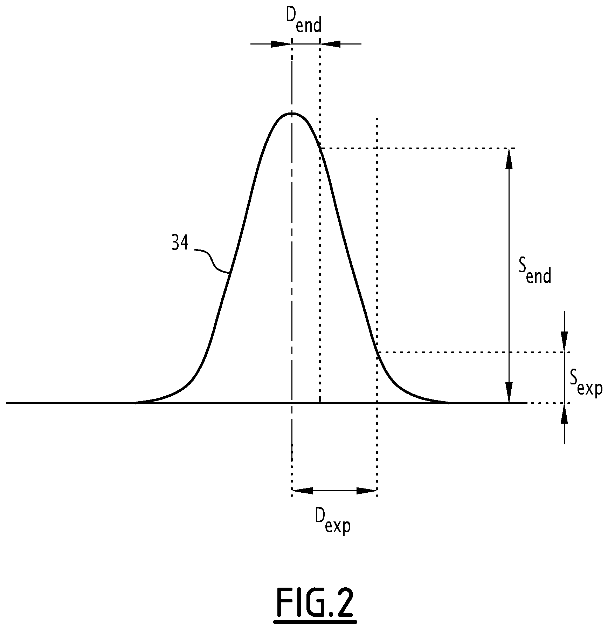

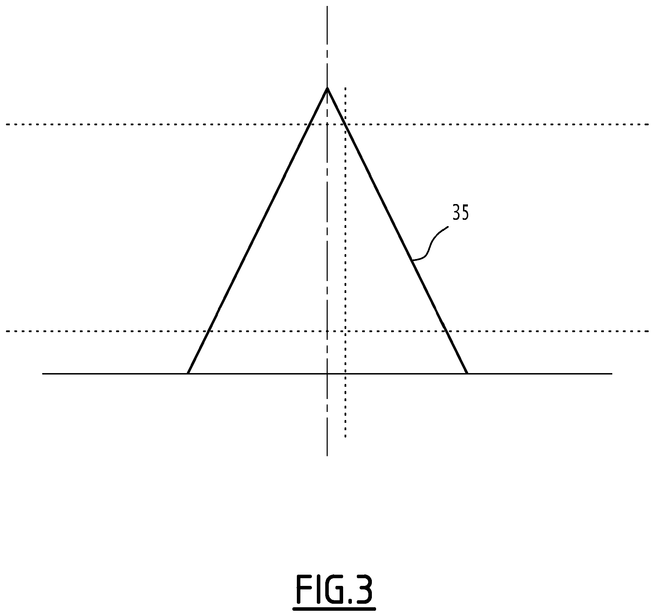

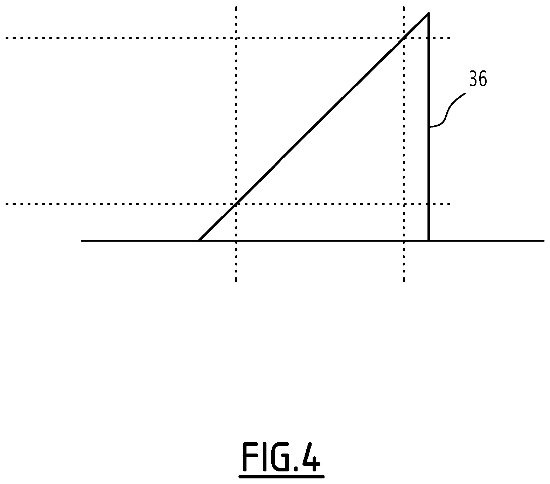

Les Figures 2, 3 et 4 illustrent respectivement trois exemples de profils en énergie 34, 35, 36. Sur les trois profils illustrés, l'axe des abscisses représente la position le long d'un axe compris dans le plan de la surface du produit, et l'axe des ordonnées la densité d'énergie reçue en cette position. Chaque point du profil d'énergie associe donc à une position donnée la densité d'énergie reçue en cette position.

Par exemple, le pulse présente un axe de symétrie Z parallèle à la direction de propagation du pulse (l'impact du pulse sur le produit étant par exemple de forme circulaire), et le profil en énergie associe une densité d'énergie à chaque distance par rapport au centre du cercle formé par l'impact du pulse (ou centre du pulse).

Les profils en énergie 34 et 35 sont des exemples d'un tel profil.

Le profil en énergie 34 est de forme circulaire, i.e. tel que tous les points situés à la même distance du centre du pulse reçoivent la même densité d'énergie.

Le profil en énergie 35 est de forme carrée, et tel que tous les points situés sur le côté d'un carré ayant pour centre le centre du pulse reçoivent la même densité d'énergie.

Selon un autre exemple, l'impact du pulse sur le produit est tel que la densité d'énergie sur la portion impactée est constante selon un axe Y orthogonal à la direction de propagation du pulse, et le profil en énergie associe une densité d'énergie à chaque position le long d'un axe X orthogonal à l'axe Y et à la direction de propagation du pulse.

Le profil en énergie 36 est un exemple d'un tel profil. Dans cet exemple, la densité d'énergie est une fonction linéaire croissante de la position le long de l'axe X.

De préférence, comme illustré à titre d'exemple par le profil 34, le profil en énergie est de type gaussien, i.e. tel que la densité d'énergie reçue dans un plan orthogonal à la direction de propagation du pulse suit une loi gaussienne.

Le profil en énergie d'un pulse gaussien peut s'exprimer comme suit :

$$E(x) = E_{pic}*exp(-x^2/2\sigma^2)$$

avec $E_{pic} = E_{pulse} / (2 \pi \sigma^2)$ où :

$E_{pic}$ est la densité d'énergie de pic de la gaussienne.
$E_{pulse}$ est l'énergie de pulse,
x est la distance au centre du pulse,
E(x) est la densité d'énergie reçue à la distance x du centre du pulse,

σ, l'écart-type de la gaussienne.

De préférence, le profil de densité d'énergie présente une pente faible, c'est-à-dire que la dérivée de la densité d'énergie par rapport à la position est inférieure à 1, notamment, s'il s'agit d'un profil gaussien, ce profil est tel que σ> Epic*exp(-1/2).

De préférence, la source laser 30 est configurée pour émettre des pulses laser dont le profil en énergie est connu.

En variante, comme décrit ci-après, le profil en énergie des pulses laser n'est pas connue a priori, et l'ensemble de détermination 10 du seuil de densité d'énergie comporte en outre un système de détermination du profil d'énergie du pulse émis par la source laser.

Le profil en énergie est dans tous les cas caractérisé par sa forme (telle que représentée sur les Figures 2 à 4) et par la puissance ou l'énergie du pulse.

Le système d'acquisition d'images 22 est configuré pour acquérir, pour chaque section considérée du produit, une image de la portion impactée par les pulses laser émis par le système d'émission 20, lors du défilement du produit.

Le système d'acquisition d'images 22 comprend par exemple une caméra 38, notamment à haute résolution. En fonctionnement, la caméra 38 est positionnée en face du produit lors de son défilement.

Le contrôleur 26 est configuré pour synchroniser le système d'émission 20 de pulses laser et le système d'acquisition d'images 22. En particulier, le contrôleur 26 est configuré pour commander l'émission de pulses laser par le système d'émission 20 et pour commander l'acquisition d'une image de la zone impactée par ces pulses par le système d'acquisition d'images 22.

Le système de traitement 24 est configuré pour déterminer, à partir de chaque image acquise par le système d'acquisition d'images 22, le seuil de densité d'énergie d'expulsion de l'oxyde $S_{exp}$, correspondant à la densité d'énergie minimale nécessaire à l'expulsion de la couche d'oxyde sur la section considérée.

De préférence, le système de traitement 24 est en outre configuré pour déterminer, à partir de chaque image acquise par le système d'acquisition d'images 22, le seuil de densité d'énergie d'endommagement du métal $S_{end}$, correspondant à la densité d'énergie au-dessus de laquelle une dégradation de la surface du produit, sous la couche d'oxyde, est constatée.

A cette fin, le système de traitement 24 est configuré pour recevoir chaque image acquise du système d'acquisition d'images 22.

Le système de traitement 24 est en outre configuré pour recevoir des informations relatives au profil en énergie du pulse laser émis sur le produit en défilement par le système d'émission 20 de pulses laser, en particulier par la source laser 30.

Le système de traitement 24 comprend par exemple un analyseur d'images 40 et un module de détermination de seuils 42.

L'analyseur d'images 40 est configuré pour déterminer, par analyse de chaque image acquise telle que transmise par le système d'acquisition d'images 22, au moins une dimension d'une zone décapée de la surface du produit métallique, i.e. dépourvue d'oxyde.

L'analyseur d'images 40 est apte à déterminer des informations relatives à la zone décapée, notamment au moins une dimension représentative de la forme de cette zone, notamment du contour de cette zone.

Par exemple, dans le cas d'un pulse dont le profil de densité d'énergie est gaussien, la zone décapée a une forme circulaire, et une dimension représentative de cette forme est par exemple le diamètre, le rayon, la circonférence ou l'aire de la zone circulaire.

Selon un autre exemple, la zone décapée est de forme rectangulaire, et la dimension représentative de cette forme est la longueur et/ou la largeur de la zone rectangulaire.

L'analyseur d'images 40 est apte à transmettre les informations relatives à la zone décapée au module de détermination de seuils 42.

De préférence, l'analyseur d'images 40 est en outre configuré pour déterminer au moins une dimension d'une zone endommagée de la surface du produit métallique, c'est-à-dire une zone sur laquelle le métal sous-jacent à la couche d'oxyde a été endommagé.

Le module de détermination de seuils 42 est propre à recevoir ces informations.

Le module de détermination de seuils 42 est par ailleurs propre à recevoir des informations relatives au profil en énergie des pulses laser dont l'émission a généré la zone décapée. Ces informations comprennent généralement la forme du profil en énergie et la puissance ou l'énergie du pulse.

Notamment, la source laser ayant émis un pulse en un instant $t_e$ sur une portion de la section considérée du produit, l'image de cette portion ayant été acquise en un instant $t_e + \Delta t$, les informations relatives au profil en énergie des pulses laser sont représentatives des pulses laser émis en l'instant $t_e$.

Ces informations relatives au profil en énergie des pulses laser sont par exemple enregistrées sur une mémoire du module de détermination de seuils 42.

Le module de détermination de seuils 42 est apte à déterminer, à partir des informations relatives au profil en énergie et des informations relatives à la zone décapée, le seuil de densité d'énergie d'expulsion de l'oxyde $S_{exp}$.

De préférence, le module de détermination de seuils 42 est en outre configuré pour déterminer, à partir des informations relatives au profil en énergie et des informations relatives à la zone décapée, le seuil de densité d'énergie d'endommagement du métal $S_{end}$.

A cette fin, le module de détermination de seuils 42 est apte à déterminer, à partir du profil en énergie du pulse laser, quelle densité d'énergie a conduit au décapage pour obtenir la zone décapée.

Par exemple, le module de détermination de seuils 42 est apte à déterminer, à partir du profil en énergie, quelle densité d'énergie est reçue sur le contour de la zone décapée, cette densité d'énergie correspondant alors à la densité d'énergie minimale pour décaper la couche d'oxyde.

Notamment, si le pulse émis par le système d'émission 20 est un pulse gaussien, la zone décapée étant circulaire de diamètre D, le seuil de densité d'énergie d'expulsion de l'oxyde $S_{exp}$ est exprimé sous la forme :

$$S_{exp} = E_{pic} * exp(-D^2/8\sigma^2).$$

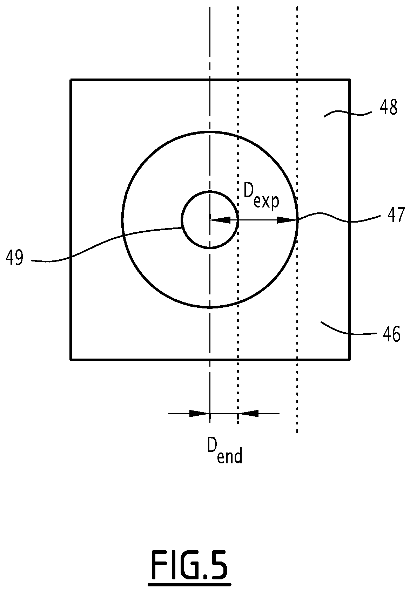

A titre d'exemple, on a représenté sur les Figures 5 à 7 une portion de la surface du produit impactée par le pulse ayant un profil tel qu'illustré sur les Figures 2 à 4 respectivement.

Sur la Figure 5, la surface 46 résulte de l'émission du pulse ayant le profil en énergie 34. Le contour 47 délimite la zone décapée du produit, dépourvue d'oxyde. La surface 46 comprend ainsi une portion non décapée 48 et une zone décapée délimitée par le contour 47, de forme circulaire. La zone décapée comprend en son centre une zone endommagée, délimitée par un contour circulaire 49.

La zone décapée est formée par les points de la surface 46 ayant reçu une densité d'énergie suffisante pour décaper la couche d'oxyde. Le contour 47 de la zone décapée est ainsi formé par les points ayant reçu une densité d'énergie égale au seuil de densité d'énergie d'expulsion de l'oxyde $S_{exp}$.

Comme illustré sur la Figure 5, la détermination d'une dimension, dans l'exemple présent du diamètre $D_{exp}$ de la zone décapée permet ainsi de déterminer, par comparaison avec le profil en énergie 34, quel est le seuil de densité d'énergie d'expulsion de l'oxyde $S_{exp}$, i.e. la densité d'énergie minimale pour expulser l'oxyde de la surface (Figure 2).

Par ailleurs, la zone endommagée est formée par les points de la surface 46 ayant reçu une densité d'énergie suffisante pour endommager le produit sous la couche d'oxyde. La détermination du diamètre $D_{end}$ du contour 49 de la zone endommagée permet de déterminer, par comparaison avec le profil en énergie 34, quel est le seuil de densité d'énergie d'endommagement du métal $S_{end}$.

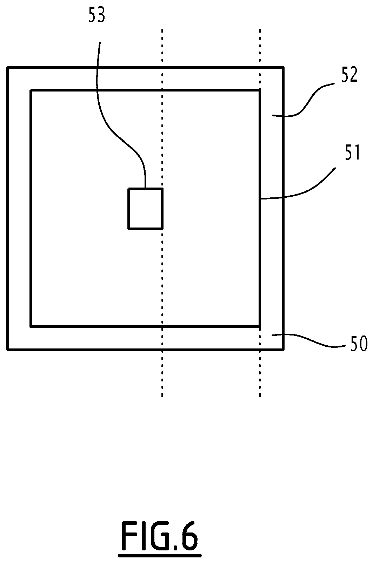

Sur la Figure 6, la surface 50 résulte de l'émission du pulse ayant le profil en énergie 35. Le contour 51, de forme carrée, délimite la zone décapée du produit, dépourvue d'oxyde. La surface 50 comprend ainsi une portion non décapée 52 et une zone décapée. Dans ce mode de réalisation, la zone décapée est de forme carrée. La zone décapée comprend en son centre une zone endommagée, délimitée par un contour carré 53.

La détermination de la longueur du côté du contour 51 permet ainsi de déterminer, par comparaison avec le profil en énergie 35, le seuil de densité d'énergie d'expulsion de l'oxyde $S_{exp}$. De même, la détermination de la longueur du côté de la zone endommagée permet de déterminer le seuil de densité d'énergie d'endommagement du métal $S_{end}$.

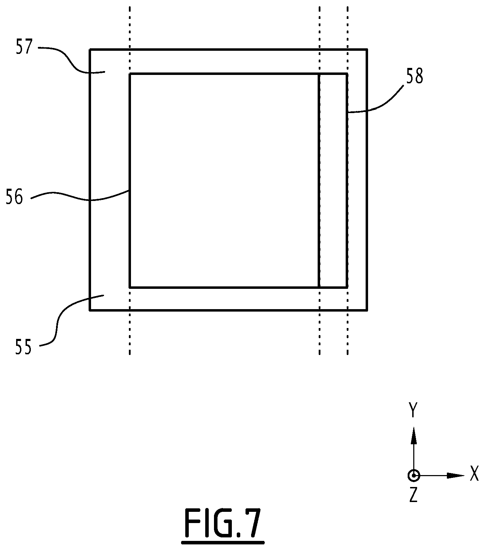

Enfin, sur la Figure 7, la surface 55 résulte de l'émission du pulse ayant le profil en énergie 36. Le contour 56, de forme rectangulaire, délimite la zone décapée du produit, dépourvue d'oxyde. La surface 55 comprend ainsi une portion non décapée 57 et une zone décapée. Dans ce mode de réalisation, la zone décapée est de forme rectangulaire. La zone décapée comprend en son centre une zone endommagée, délimitée par un contour rectangulaire 58.

La détermination de la longueur du contour 56 selon l'axe X permet de déterminer, par comparaison avec le profil en énergie 36, le seuil de densité d'énergie d'expulsion de l'oxyde $S_{exp}$. De même, la détermination de la longueur selon l'axe X du contour 58 de la zone endommagée permet de déterminer le seuil de densité d'énergie d'endommagement du métal $S_{end}$.

Le module de détermination de seuils 42 est propre à transmettre le seuil de densité d'énergie d'expulsion de l'oxyde $S_{exp}$ ainsi déterminé et, le cas échéant, le seuil de densité d'énergie d'endommagement du métal $S_{end}$ à l'ensemble 12 de décapage laser.

De préférence, le système de traitement 24, en particulier le module de détermination de seuils 42 est également propre à transmettre au système d'émission 20 le seuil de densité d'énergie d'expulsion et le seuil d'endommagement du métal $S_{end}$ si celui-ci a été déterminé. Le système d'émission 20 est alors adapté pour contrôler l'énergie des pulses lasers d'analyse de telle sorte que l'émission des pulses laser d'analyse résulte effectivement en un décapage d'une partie de la portion impactée, sans endommager le métal.

Notamment, si l'émission d'un pulse laser d'analyse précédent n'a pas généré de zone décapée (le seuil de densité d'énergie d'expulsion étant alors inexistant), le système d'émission 20 est propre à recevoir cette information du système de traitement 24. Le système d'émission 20 est alors propre à commander l'émission de pulses laser d'analyse de plus grande énergie que le pulse laser d'analyse émis à l'instant précédent.

A l'inverse, si l'émission d'un pulse laser d'analyse précédent a généré une zone endommagée, le système d'émission 20 est propre à recevoir le seuil de densité d'énergie d'endommagement du système de traitement 24. Le système d'émission 20 est alors configuré pour commander l'émission de pulses lasers d'analyse de plus faible énergie que le pulse laser d'analyse émis à l'instant précédent, en particulier d'énergie telle que la densité d'énergie des pulses lasers d'analyse reste inférieure au seuil de densité d'énergie d'endommagement.

Pour obtenir une mesure fiable, il est souhaitable que la bande 3 conserve une distance constante par rapport à l'ensemble de détermination 10 du seuil de densité d'énergie, c'est-à-dire que la bande 3 ne doit pas osciller et doit rester à hauteur fixe. Ceci peut être fait en appliquant une traction suffisamment importante à la bande 3 à l'aide de blocs en S ou en plaçant un rouleau de soutien 24 sous la bande 3 assurant la fixité de sa hauteur sous le système d'émission 20 de pulses laser.

Par souci de simplicité, sur la figure 1 on n'a représenté l'ensemble de détermination 10 du seuil de densité d'énergie que sur la face supérieure de la bande 3. Mais, bien entendu, d'autres lasers et leurs capteurs associés sont aussi présents sur la surface inférieure de la bande 3. De même, un rouleau de soutien comparable au rouleau 24 pourra être placé au contact de la surface supérieure de la bande 3 pour assurer que la bande 3 garde une distance fixe par rapport aux lasers qui inspectent sa surface inférieure.

L'ensemble de décapage laser comprend une rangée de lasers 13 de décapage.

Les lasers 13 de décapage sont par exemple des lasers pulsés Nd :YAG 1064 nm.

Ces lasers 13 de décapage sont destinés à décaper la couche d'oxyde présente à la surface du produit.

Chaque laser 13 de décapage est configuré pour émettre, sur la surface du produit en défilement, des pulses d'un rayon 14 pour la décaper. Chaque pulse couvre une zone de la surface du produit appelée spot.

L'ensemble 12 de décapage laser comprend en outre une unité de pilotage 15, configurée pour commander les lasers 13 de décapage, en particulier pour déterminer les paramètres de fonctionnement des lasers 13 en fonction du seuil de densité d'énergie d'expulsion de l'oxyde $S_{exp}$, et, le cas échéant, du seuil de densité d'énergie d'endommagement du métal $S_{end}$.

Notamment, l'unité de pilotage 15 est configurée pour commander les lasers 13 de décapage de telle sorte que chaque point de la section considérée de la surface du produit soit exposé en au moins un instant à une densité d'énergie supérieure au seuil de densité d'énergie d'expulsion de l'oxyde $S_{exp}$, tel que déterminé pour cette section.

A cette fin, l'unité de pilotage 15 est configurée pour contrôler la densité d'énergie de pic émise par chaque laser 13 de décapage et pour commander un balayage de la section considérée par les lasers, de telle sorte les spots des pulses émis par les lasers 13 de décapage couvrent l'ensemble de la section considérée et de telle sorte que chaque point de cette section soit exposé en au moins un instant à une densité d'énergie supérieure au seuil de densité d'énergie d'expulsion de l'oxyde $S_{exp}$.

La densité d'énergie de pic émise par chaque laser 13 de décapage est choisie supérieure au seuil de densité d'énergie d'expulsion de l'oxyde $S_{exp}$ et, le cas échéant, inférieure au seuil de densité d'énergie d'endommagement $S_{end}$.

Pour commander un tel balayage, l'unité de pilotage 15 comprend par exemple un système de balayage optique et/ou mécanique, configuré pour déplacer latéralement les spots des rayons 14 sur la surface du produit, ou un système optique transformant les spots en lignes.

De la même façon que pour l'ensemble de détermination 10 du seuil de densité d'énergie, il est souhaitable que la bande 3 conserve une hauteur fixe lors du passage sous les lasers 13 de décapage, et un rouleau de soutien 25 comparable au précédent rouleau de soutien 24, ou tout autre dispositif fonctionnellement équivalent, peut être utilisé à cet effet.

Egalement, d'autres lasers 13 non représentés, et leur éventuel rouleau de soutien associé, sont prévus pour décaper la surface inférieure de la bande 3, sur la base du seuil de densité d'énergie d'expulsion de l'oxyde $S_{exp}$, et, le cas échéant, du seuil de densité d'énergie d'endommagement du métal $S_{end}$.

Les lasers 13 de décapage peuvent être chacun placés non perpendiculairement à la tôle afin de minimiser la perturbation du faisceau incident par les particules d'oxydes projetés lors des pulses précédents émis par le laser 13 lui-même ou d'autres lasers 13 de la rangée.

Selon un mode de réalisation, chaque section étant une bande élémentaire, chaque bande élémentaire est traitée en plusieurs fois par les lasers de décapage afin que les pulses consécutifs ne soient pas absorbés par les particules et/ou le plasma des pulses précédents. Dans ce cas, on effectue une première sous-étape de décapage d'une ligne transversale avec des pulses séparés d'une distance $D_{inter}$ égale à N fois l'écart entre pulse qui serait nécessaire à obtenir une couverture homogène, puis on repasse N fois sur cette ligne en prenant soin entre chaque sous-étape de décaler la position du début de la ligne de la distance $D_{inter}$.

Le nombre de lasers 13 de décapage nécessaires pour le traitement de l'ensemble de la surface de la bande 3 est minimisé par le fait que chaque laser 13 de décapage dispose d'un système de balayage ultra-rapide, optique ou mécanique ou combinant ces deux principes, qui procure un déplacement latéral du spot du rayon 14 de manière à juxtaposer les spots pour former une ligne continue couvrant la totalité de la largeur de la bande 3, de préférence avec un recouvrement nul ou minimal des spots pour ne pas risquer d'envoyer des quantités d'énergie excessives dans des zones de recouvrement des spots. En variante, l'ensemble 12 de décapage laser comporte un dispositif de focalisation à longue distance de focalisation, permettant de couvrir la totalité de la largeur de la bande 3 avec un nombre limité de lasers 13 de décapage.

L'utilisation d'un décapage laser réalisé selon l'invention, procure à l'installation de décapage une grande polyvalence, d'autant que les paramètres du décapage peuvent être aisément ajustés en cours de traitement si on constate au cours de l'opération qu'ils ne sont pas optimaux. C'est le cas, par exemple, de la surface du spot de chaque laser 13 de décapage, qu'un système classique de réglage de la focalisation du rayon peut permettre de modifier.

Au voisinage des lasers 13 de décapage, on dispose des moyens (non représentés) pour évacuer et, de préférence, recueillir, par exemple par aspiration ou brossage en direction d'un récipient, les oxydes qui ont été détachés de la surface de la bande 3 ainsi que les fumées pouvant être générées pendant le traitement (par la vaporisation de particules métalliques, d'oxydes ou de matières organiques). De cette façon, on se donne la possibilité de récupérer aisément une quantité maximale de ces oxydes, pour éviter qu'ils ne se dispersent dans l'atmosphère ambiante en la polluant, et pour se donner la possibilité d'en retraiter la plus grande partie en vue de récupérer les métaux qu'ils contiennent. De plus, cette opération permet de se débarrasser des oxydes qui auraient pu n'être qu'imparfaitement détachés de la surface de la bande 3 par les lasers 13 (particulièrement sur la surface supérieure de la bande 3, où on ne peut compter sur la gravité pour aider au détachement des oxydes). Enfin l'aspiration de ces poussières et vapeurs permet d'éviter l'endommagement des systèmes optiques des lasers sur lesquels celles-ci peuvent s'agglomérer, provoquant leurs échauffements voire leurs ruptures.

En variante, la bande 3 circule à la verticale, de manière à éviter que les oxydes détachés de la surface de la bande 3 par les lasers 13 se redéposent sur la surface de la bande 3 ou sur l'ensemble de détermination 10, en particulier sur les optiques de l'ensemble de détermination 10.

Après son passage sous les lasers 13 de décapage, la bande 3 est donc, en principe, entièrement décapée. On le vérifie par des moyens adéquats, par exemple à l'aide d'un dispositif optique de contrôle de la qualité du décapage tel qu'une caméra 16, ou un ensemble de tels dispositifs optiques 16, qui examine(nt) la surface de la bande 3 sur l'ensemble de sa largeur et détermine(nt) quelles zones de la bande 3 n'auraient éventuellement pas été décapées de façon satisfaisante. Les différences de couleur sur la surface de la bande 3 peuvent servir de base à cette détermination. Un des avantages du dispositif d'aspiration ou de brossage ou équivalent dont on vient de parler est aussi qu'il permet d'éviter que des morceaux d'oxydes qui seraient demeurés sur la surface supérieure (notamment) de la bande 3 tout en en étant détachés ne soient considérés à tort par la caméra 16 comme toujours présents et nécessitant, donc, un décapage complémentaire pour leur élimination.

Si les résultats fournis par le dispositif optique 16 ne sont pas satisfaisants, alors on peut procéder à un décapage complémentaire concernant les parties de la bande 3 imparfaitement décapées, ou, par sécurité, l'ensemble de la bande 3.

En outre, la ligne peut comprendre, à la suite de la section de décapage laser, une section de bacs de décapage par voie humide, chimique et/ou électrolytique, que l'on pourrait remplir au moins temporairement, pour éliminer les défauts constatés. Dans le cas où la bande 3 serait décapée correctement, ces bains resteraient vides.

Une autre solution consiste à réaliser la déviation de la bande 3 dans le ou les bains de décapage au moyen de rouleaux plongeurs, déplaçables verticalement et disposés de façon à pouvoir agir sur la surface supérieure de la bande 3. En fonctionnement normal, ces rouleaux sont dans une position telle qu'ils laissent la bande 3 en défilement en dehors du bain de décapage au voisinage duquel ils sont disposés. Lorsqu'il s'avère qu'un décapage chimique et/ou électrolytique de la bande 3 est localement nécessaire, au moins un de ces rouleaux plongeurs s'abaisse de manière à appuyer sur la surface supérieure de la bande 3 et faire pénétrer temporairement la portion de la bande 3 à traiter dans le ou les bains de décapage correspondants que l'on veut utiliser.

On va maintenant décrire un procédé de décapage d'un produit métallique en défilement présentant à sa surface une couche d'oxyde selon un mode de réalisation, mis en oeuvre au moyen de l'installation décrite en référence à la figure 1.

Dans l'exemple décrit, le procédé de décapage est mis en œuvre après le passage du produit dans le four de recuit 5.

On considérera par ailleurs, à titre d'exemple, que chaque section considérée est une bande élémentaire de largeur égale à celle du produit à décaper.

Pour chaque section considérée du produit, le procédé comprend une étape de détermination d'un seuil de densité d'énergie d'expulsion de la couche d'oxyde, puis une étape de décapage en fonction du seuil de densité d'énergie d'expulsion ainsi déterminé.

Pour chaque section, l'étape de détermination d'un seuil de densité d'énergie d'expulsion de la couche d'oxyde comprend l'émission de pulses laser d'analyse de longueur d'onde et durée de pulse égales à celles du ou des lasers de décapage 13 sur une portion de la section considérée, pour former, au sein de ladite portion, une zone décapée dépourvue de la couche d'oxyde,

Les pulses lasers d'analyse sont émis par le système d'émission 20, en particulier par la source laser 30, et focalisés sur la portion visée par le dispositif optique 32.

L'émission des pulses lasers d'analyse est contrôlée par le contrôleur 26, qui contrôle les instants d'émission de ces pulses.

En outre, l'énergie des pulses lasers d'analyse est de préférence contrôlée par le système d'émission 20 de telle sorte que l'émission des pulses laser d'analyse résulte effectivement un décapage d'une partie de la portion impactée, sans endommager le métal.

L'énergie des pulses lasers d'analyse est sélectionnée, par exemple en fonctions d'informations reçues par le système d'émission 20 du système de traitement 24 (en particulier du module de détermination de seuils 42), suite à l'émission d'un pulse laser d'analyse en un instant précédent.

Notamment, si l'émission d'un pulse laser d'analyse précédent n'a pas généré de zone décapée (le seuil de densité d'énergie d'expulsion étant alors inexistant), le système d'émission 20 reçoit cette information du système de traitement 24. Le système d'émission 20 génère alors l'émission de pulses laser d'analyse de plus grande énergie que le pulse laser d'analyse émis à l'instant précédent.

A l'inverse, si l'émission d'un pulse laser d'analyse précédent a généré une zone endommagée (le seuil de densité d'énergie d'endommagement ayant alors été déterminé par le système de traitement 24), le système d'émission 20 reçoit le seuil de densité d'énergie d'endommagement du système de traitement 24. Le système d'émission 20 génère alors l'émission de pulses lasers d'analyse de plus faible énergie que le pulse laser d'analyse émis à l'instant précédent, en particulier d'énergie telle que la densité d'énergie des pulses lasers d'analyse reste inférieure au seuil de densité d'énergie d'endommagement.

La section du produit, en défilement, passe ensuite devant le système d'acquisition d'images 22.

L'étape de détermination d'un seuil de densité d'énergie d'expulsion comprend alors une capture, par le système d'acquisition 22, d'une image de la portion de la surface impactée par les pulses laser d'analyse.

Cette image est transmise au système de traitement 24, qui détermine alors, à partir de cette image, le seuil de densité d'énergie d'expulsion de l'oxyde $S_{exp}$.

De préférence, le système de traitement 24 détermine en outre, à partir de cette image, le seuil de densité d'énergie d'endommagement du métal $S_{end}$.

La détermination du seuil de densité d'énergie d'expulsion de l'oxyde $S_{exp}$ comprend la détermination, à partir de l'image, d'une dimension de la zone décapée. Cette dimension est par exemple déterminée par l'analyseur d'images 40.

La détermination du seuil de densité d'énergie d'expulsion de l'oxyde $S_{exp}$ comprend ensuite la détermination, à partir de la dimension de la zone décapée, du seuil de densité d'énergie d'expulsion de la couche d'oxyde.

Le seuil de densité d'énergie d'expulsion de la couche d'oxyde est par exemple déterminé par le module de détermination de seuils 42, à partir de la dimension de la zone décapée et d'informations relatives au profil en énergie des pulses laser d'analyse dont l'émission a généré la zone décapée.

La détermination du seuil de densité d'énergie d'endommagement du métal $S_{end}$ comprend la détermination, à partir de l'image, d'une dimension d'une zone endommagée sur la portion impactée. Cette dimension est par exemple déterminée par l'analyseur d'images 40.

La détermination du seuil de densité d'énergie d'endommagement du métal $S_{end}$ comprend ensuite l'évaluation, à partir de la dimension ainsi déterminée, du seuil de densité d'énergie d'endommagement du métal $S_{end}$.

Le seuil de densité d'énergie d'endommagement du métal $S_{end}$ est par exemple évalué par le module de détermination de seuils 42, à partir de la dimension de la zone endommagée et des informations relatives au profil en énergie des pulses laser d'analyse dont l'émission a généré la zone endommagée.

De préférence, le seuil de densité d'énergie d'expulsion $S_{exp}$ et le seuil de densité d'énergie d'endommagement $S_{end}$ sont transmis au système d'émission 20, dans le but de permettre de contrôler la puissance des pulses lasers d'analyse émis en des instants postérieurs de telle sorte que l'émission des pulses laser d'analyse en ces instants postérieurs résulte effectivement un décapage d'une partie de la portion impactée, sans endommager le métal.

La section considérée du produit, toujours en défilement, passe alors devant l'ensemble 12 de décapage laser, où elle est soumise à l'étape de décapage.

Lors de l'étape de décapage, les lasers 13 émettent des pulses laser sur la section considérée pour la décaper, la densité d'énergie des pulses étant supérieure au seuil de densité d'énergie d'expulsion déterminé.

En particulier, l'unité de pilotage 15 reçoit le seuil de densité d'énergie d'expulsion de l'oxyde $S_{exp}$ déterminé pour la section considérée, et le cas échéant le seuil de densité d'énergie d'endommagement $S_{end}$, et commande les lasers 13 de telle sorte que chaque point de la section considérée soit exposé en au moins un instant à une densité d'énergie supérieure au seuil de densité d'énergie d'expulsion de l'oxyde $S_{exp}$.

A cette fin, l'unité de pilotage 15 contrôle la densité d'énergie de pic émise par chaque laser 13 et commande un balayage de la section considérée par les lasers, de telle sorte que les spots des pulses émis par les lasers 13 couvrent l'ensemble de la section considérée et de telle sorte que chaque point de cette section soit exposé en au moins un instant à une densité d'énergie supérieure au seuil de densité d'énergie d'expulsion de l'oxyde $S_{exp}$.

La densité d'énergie de pic émise par chaque laser 13 est choisie supérieure au seuil de densité d'énergie d'expulsion de l'oxyde $S_{exp}$ et, le cas échéant, inférieure au seuil de densité d'énergie d'endommagement $S_{end}$.

A la suite du décapage, les oxydes détachés sont évacués et, de préférence, recueillis, par exemple par aspiration ou brossage en direction d'un récipient.

Après son passage sous les lasers 13, la section considérée est en principe entièrement décapée. Comme décrit ci-dessus, l'état de la section est vérifié, par exemple à l'aide du dispositif optique de contrôle de la qualité du décapage tel qu'une caméra 16, qui examine la surface de la section sur l'ensemble de sa largeur et détermine quelles zones de cette section n'auraient éventuellement pas été décapées de façon satisfaisante.

Les étapes de détermination d'un seuil de densité d'énergie d'expulsion de la couche d'oxyde et de décapage en fonction du seuil de densité d'énergie d'expulsion sont mises en oeuvre successivement pour chaque section du produit en défilement.

De préférence, d'une section à une autre, la source laser 30 est déplacée par rapport à la ligne de production, en particulier dans une direction parallèle au plan de défilement du produit et orthogonale à la direction de défilement (c'est-à-dire selon la largeur du produit), de telle sorte que la localisation de la portion du produit impactée par la source laser 30, orthogonalement à la direction de défilement du produit, varie d'une section à une autre.

Par exemple, pour une bande 3 de largeur L (selon la direction y parallèle à la surface et transversale à la direction de défilement), une première section sera impactée par la source laser 30 sur une portion de coordonnée $y=y_0$, une deuxième section sera impactée par la source laser 30 sur une portion de coordonnée $y=y_0+\Delta y$ et ainsi de suite.

Selon un mode de réalisation, au moins certaines des informations relatives au profil en énergie des pulses émis par la source laser 30 n'est pas connue a priori, notamment sa forme ou sa puissance ou énergie.

Si la forme du profil en énergie n'est pas connue, l'ensemble de détermination 10 du seuil de densité d'énergie comporte par exemple un système de détermination de cette forme.

Le système de détermination est configuré pour analyser les pulses laser émis par le système d'émission 20 et pour déterminer la forme du profil en énergie. Un tel système de détermination est particulièrement utile lorsque la forme du faisceau pulsé émis par le système d'émission 20 n'est pas stable dans le temps.

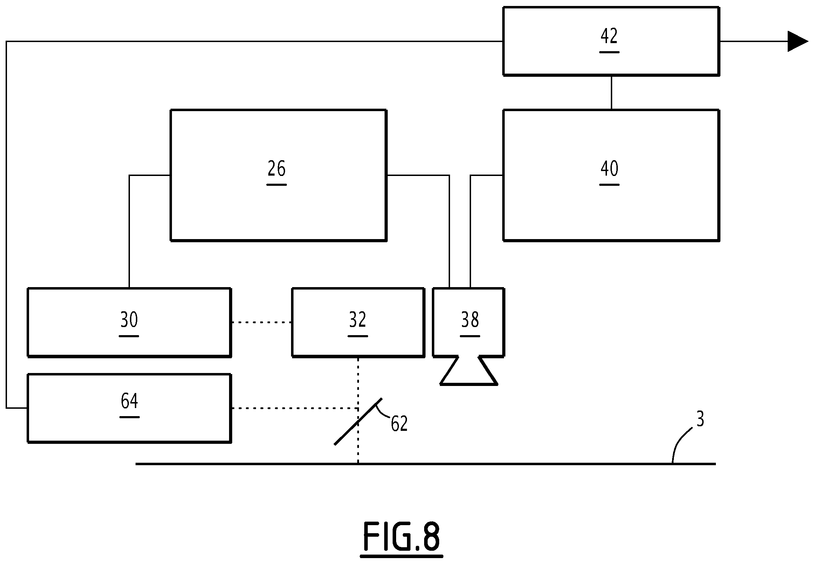

Un système de détermination, illustré à titre d'exemple sur la Figure 8, comprend un dispositif optique 62, par exemple une lame séparatrice, configuré pour dévier une partie de chaque pulse laser d'analyse émis par le système d'émission 20 vers un analyseur de faisceau 64.

Le système de détermination comprend en outre l'analyseur de faisceau 64, configuré pour déterminer la forme du profil en énergie des pulses à partir de la partie de pulse déviée et pour transmettre cette forme au module de détermination de seuils 42.

L'analyseur de faisceau 64 comprend un capteur qui est maintenu à une distance prédéterminée du dispositif optique 62, cette distance étant égale à la distance entre le dispositif optique 62 et la surface du produit en défilement.

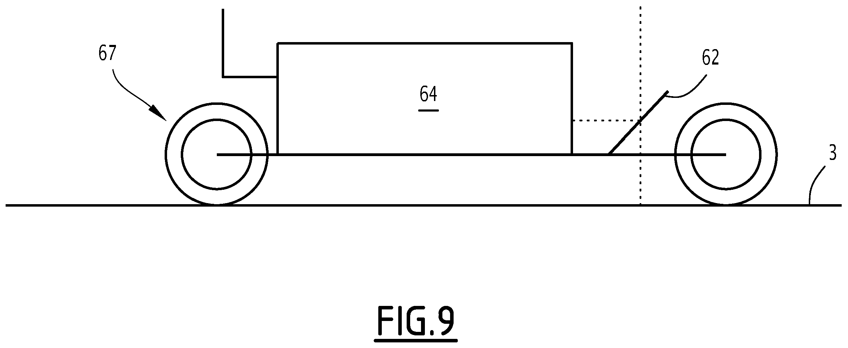

A cette fin, l'analyseur de faisceau 64 et le dispositif optique 62 sont par exemple montés fixes l'un par rapport à l'autre et par rapport au produit dans la direction orthogonale à la surface du produit, mais mobile par rapport à la direction de défilement de la bande 3. Par exemple, comme illustré sur la Figure 9, l'analyseur de faisceau 64 et le dispositif optique 62 sont montés fixes sur un système roulant 67 sur la surface du produit 3. Le système roulant est mobile en translation (par roulement) par rapport au produit dans la direction x de défilement du produit.

Ainsi, une distance constante est maintenue entre l'analyseur de faisceau 64 et le dispositif optique 62 d'une part, et entre le dispositif optique 62 et la surface du produit 3 d'autre part.

Par ailleurs, le module de détermination de seuils 42 est configuré pour corriger le profil en énergie reçu pour tenir compte du fait que ce profil a été obtenu sur une partie du faisceau pulsé.

Selon ce mode de réalisation, le procédé comprend la détermination de la forme du profil.

La détermination de la forme du profil comprend par exemple la déviation d'une partie du pulse laser émis par le système d'émission 20 vers l'analyseur de faisceau 64, notamment au moyen de la lame séparatrice, et l'évaluation de la forme du profil en énergie par l'analyseur de faisceau 64.

La forme du profil en énergie ainsi déterminée est alors transmise au module de détermination de seuils 42.

Selon ce mode de réalisation, le pulse dont le profil en énergie est déterminé est un pulse laser d'analyse, i.e. le même que celui impactant la surface du produit en générant une zone décapée.

De préférence, l'ensemble de détermination 10 du seuil de densité d'énergie comporte en outre un dispositif de détermination de l'énergie de chaque pulse émis par la source laser 30. En effet, même lorsque l'énergie de pulse moyenne est connue, des fluctuations de cette énergie sont possibles, et connaitre l'énergie de chaque pulse émis par la source laser 30 sur la surface du produit permet alors une détermination plus exacte du ou des seuils de densité d'énergie. Un tel dispositif de détermination de l'énergie des pulses comporte par exemple une photodiode calibrée positionnée sur un côté du faisceau laser.

Selon un autre mode de réalisation, la forme du profil en énergie des pulses émis par le système d'émission 20 est connue, mais l'énergie ou la puissance des pulses ne l'est pas, et l'ensemble de détermination 10 du seuil de densité d'énergie comporte en outre un système de détermination de l'énergie ou de la puissance des pulses émis par le système d'émission 20.

Un tel système de détermination est généralement destiné à déterminer ponctuellement la puissance (ou l'énergie) des pulses émis pour effectuer un recalibrage, alors que le dispositif de détermination de l'énergie tel que décrit ci-dessus est généralement destiné à déterminer l'énergie de chacun des pulses, en temps réel.

Ce système de détermination de l'énergie diffère de celui illustré à titre d'exemple sur la Figure 9 essentiellement en ce que l'analyseur de faisceau 64 est remplacé par un puissancemètre.

Dans ce mode de réalisation, en outre, il n'est pas nécessaire que le puissancemètre soit maintenu à une distance prédéterminée du dispositif optique qui soit égale à la distance entre le dispositif optique et la surface du produit en défilement.

Selon ce mode de réalisation, le procédé comprend la détermination de l'énergie ou de la puissance du pulse.

La détermination de l'énergie ou de la puissance du pulse comprend par exemple la déviation d'une partie du pulse laser émis par le système d'émission 20 vers le puissancemètre, notamment au moyen de la lame séparatrice, et l'évaluation de l'énergie et/ou de la puissance du pulse par le puissancemètre.

L'énergie et/ou de la puissance du pulse ainsi déterminée est alors transmise au module de détermination de seuils 42.

Selon ce mode de réalisation, le pulse dont l'énergie ou la puissance est déterminée est également le même que celui impactant la surface du produit en générant une zone décapée.

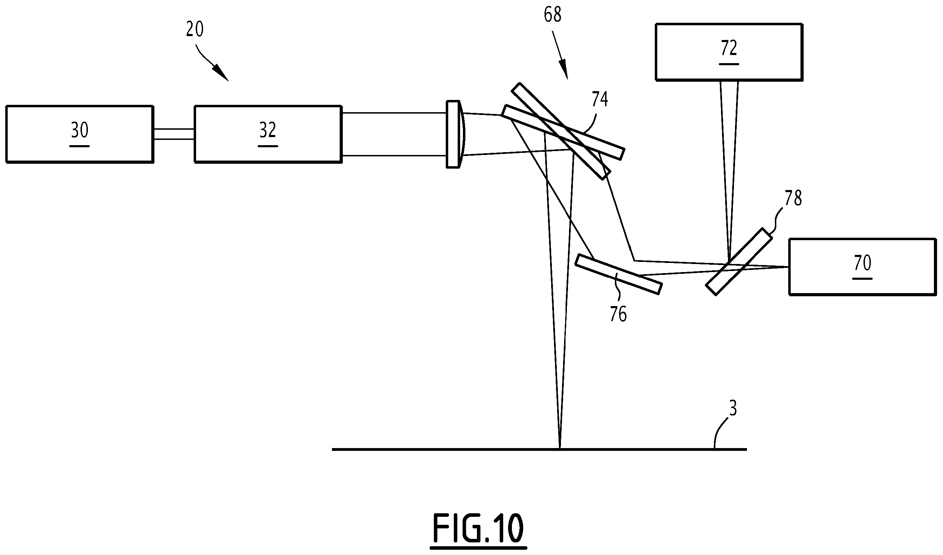

Selon un autre mode de réalisation, illustré à titre d'exemple sur la Figure 10, le profil en énergie et/ou l'énergie est déterminé sur la base de pulses qui ne sont pas des pulses impactant la surface du produit en générant une zone décapée, mais des pulses émis avant ou après ces derniers, appelé par la suite pulses auxiliaires.

Selon ce mode de réalisation, le système de détermination comprend un dispositif optique 68 configuré pour diriger le faisceau pulsé émis par le système d'émission 20 sélectivement vers un analyseur de faisceau et/ou un puissancemètre ou vers la surface du produit. Le système de détermination comprend en outre un analyseur de faisceau 70 et/ou un puissancemètre 72, configurés pour déterminer la forme du profil en énergie et/ou l'énergie du faisceau.

Le dispositif optique 68 comprend par exemple un dispositif de balayage à miroir galvanométrique 74, un miroir 76 et, de préférence, une lame séparatrice 78.

Le dispositif de balayage à miroir galvanométrique 74 (illustré sur la Figure 10 dans deux positions) est configuré pour dévier l'ensemble du faisceau émis par le système d'émission 20 sélectivement vers la surface du produit ou vers le miroir 76.

Le miroir 76 est configuré pour réfléchir le faisceau ainsi dévié vers la lame séparatrice 78.

La lame séparatrice 78 est destinée à séparer le faisceau pulsé en deux sous-faisceaux, pour les diriger d'une part vers l'analyseur de faisceau 70 et d'autre part vers le puissancemètre 72.

Si la forme du profil en énergie est connue, l'analyseur de faisceau 70 et la lame séparatrice 78 peuvent être omis.

A l'inverse, si l'énergie du pulse est connue, le puissancemètre 72 et la lame séparatrice 78 peuvent être omis.

Selon ce mode de réalisation, le procédé comprend l'émission de pulses auxiliaires par le système d'émission 20, et l'orientation de ces pulses vers l'analyseur de faisceau 70 et/ou vers le puissancemètre 72.

Lorsque l'on souhaite déterminer la forme du profil en énergie et l'énergie ou la puissance, les pulses auxiliaires sont orientés à la fois vers l'analyseur de faisceau 70 et/ou vers le puissancemètre 72, notamment par la lame séparatrice 78.

Les pulses auxiliaires sont orientés vers l'analyseur de faisceau 70 et/ou vers le puissancemètre 72 au moyen du dispositif de balayage à miroir galvanométrique 74.

Le procédé comprend ensuite l'évaluation de la forme du profil en énergie des pulses auxiliaires par l'analyseur de faisceau 70, et/ou l'évaluation de l'énergie ou de la puissance des pulses par le puissancemètre 72.

La forme, l'énergie et/ou la puissance ainsi déterminées sont alors transmises au module de détermination de seuils 42.

Une fois les pulses auxiliaires émis, le dispositif de balayage à miroir galvanométrique 74 oriente les pulses suivants vers la surface du produit 3.

Le procédé et l'installation selon l'invention permettent ainsi d'obtenir un décapage efficace de produits métallique à une échelle industrielle, en particulier grâce à la détermination précise des paramètres adéquats pour un décapage efficace de la couche d'oxyde.

Dans les exemples illustrés, il a été fait référence à des produits plats tels qu'une bande, mais l'invention est également applicable à d'autres types de produits, tels que des barres, des tubes ou des fils métalliques.

## Revendications

1. Procédé de décapage d'un produit métallique (3) en défilement présentant à sa surface une couche d'oxyde, ledit procédé utilisant un décapage par laser au moyen d'au moins un laser de décapage (13), le procédé comprenant les étapes suivantes, mises en oeuvre successivement sur chaque section d'une pluralité de sections consécutives du produit en défilement :

   - détermination d'un seuil de densité d'énergie d'expulsion de la couche d'oxyde sur la section considérée dudit produit métallique (3) en défilement, correspondant à une densité d'énergie minimale nécessaire à l'expulsion de la couche d'oxyde sur la section considérée, comprenant :

      émission de pulses laser d'analyse par un système d'émission (20) comprenant une source laser (30), les pulses laser d'analyse étant de longueur d'onde égale et de durée de pulse égale à celles du ou des lasers de décapage (13), sur une portion de ladite section considérée, pour former, au sein de ladite portion, une zone décapée dépourvue de la couche d'oxyde,
      capture d'une image de la portion de la surface impactée par lesdits pulses laser d'analyse,

détermination, à partir de ladite image, d'une dimension représentative de la zone décapée,

évaluation, à partir de ladite dimension représentative et d'informations relatives au profil en énergie des pulses laser d'analyse, du seuil de densité d'énergie d'expulsion de la couche d'oxyde,

- émission par le laser de décapage (13) de pulses laser de décapage sur la section considérée pour la décaper, la densité d'énergie des pulses de décapage étant supérieure au seuil de densité d'énergie d'expulsion de la couche d'oxyde déterminé,

le laser de décapage (13) étant commandé par une unité de pilotage (15) recevant le seuil de densité d'énergie d'expulsion de la couche d'oxyde déterminé, de telle sorte que chaque point de la section considérée soit exposé en au moins un instant à une densité d'énergie supérieure au seuil de densité d'énergie d'expulsion de la couche d'oxyde.

2. Procédé de décapage selon la revendication 1, dans lequel l'émission des pulses laser d'analyse forme, au sein de ladite portion, une zone endommagée, sur laquelle le métal sous-jacent à la couche d'oxyde a été endommagé, et le procédé comprend en outre la détermination, à partir de ladite image, d'une dimension représentative de la zone endommagée et l'évaluation, à partir de la dimension représentative de la zone endommagée et des informations relatives au profil en énergie des pulses laser d'analyse, d'un seuil de densité d'énergie d'endommagement du métal, correspondant à la densité d'énergie au-dessus de laquelle une dégradation de la surface du produit métallique (3), sous la couche d'oxyde, est constatée.

3. Procédé de décapage selon la revendication 2, **caractérisé en ce qu'**il comprend en outre une transmission du seuil de densité d'énergie d'endommagement au système d'émission (20), et **en ce que**, sur la section suivante du produit métallique (3) en défilement, le système d'émission (20) émet un pulse laser d'analyse d'énergie adaptée de telle sorte qu'en tout point de la portion impactée par les pulses lasers d'analyse, la densité d'énergie soit inférieure au seuil de densité d'énergie d'endommagement.

4. Procédé de décapage selon l'une quelconque des revendications 1 à 3, dans lequel les informations relatives au profil en énergie comprennent la forme du profil en énergie et l'énergie ou la puissance des pulses laser d'analyse.

5. Procédé de décapage selon la revendication 4, dans lequel l'étape de détermination du seuil de densité d'énergie d'expulsion de la couche d'oxyde comprend la détermination de la forme du profil en énergie des pulses laser d'analyse et/ou la détermination de l'énergie ou la puissance des pulses laser d'analyse.

6. Procédé de décapage selon la revendication 5, dans lequel l'étape de détermination du seuil de densité d'énergie d'expulsion de la couche d'oxyde comprend la détermination de la forme du profil en énergie des pulses laser d'analyse, comprenant la déviation d'une partie de chaque pulse laser d'analyse vers un analyseur de faisceau (64) et l'évaluation de la forme du profil en énergie par l'analyseur de faisceau (64).

7. Procédé de décapage selon l'une quelconque des revendications 5 ou 6, dans lequel l'étape de détermination du seuil de densité d'énergie d'expulsion de la couche d'oxyde comprend la détermination de l'énergie et/ou de la puissance des pulses laser d'analyse, comprenant la déviation d'une partie de chaque pulse laser d'analyse vers un puissancemètre, et l'évaluation de l'énergie et/ou de la puissance du pulses laser d'analyse par le puissancemètre.

8. Procédé de décapage selon la revendication 4, dans lequel l'étape de détermination du seuil de densité d'énergie d'expulsion de la couche d'oxyde comprend la détermination de la forme du profil en énergie et/ou de l'énergie ou la puissance de pulses lasers auxiliaires émis par le système d'émission (20), les pulses lasers auxiliaires étant distincts des pulses lasers d'analyse.

9. Procédé de décapage selon la revendication 8, dans lequel la détermination de la forme du profil en énergie et/ou de l'énergie ou la puissance des pulses lasers auxiliaires comprend :

l'émission des pulses lasers auxiliaires par le système d'émission (20),
l'orientation des pulses lasers auxiliaires vers un analyseur de faisceau (70) et/ou vers un puissancemètre (72) au moyen d'un dispositif de balayage à miroir galvanométrique (74),
l'évaluation de la forme du profil en énergie des pulses laser auxiliaires par l'analyseur de faisceau (64) et/ou l'évaluation de l'énergie et/ou de la puissance des pulses laser auxiliaires par le puissancemètre (72).

10. Procédé de décapage selon l'une quelconque des revendications 1 à 9, dans lequel le produit métallique (3) est une bande, une barre, une feuille, une plaque, un tube ou un fil.

11. Installation de décapage laser d'un produit métallique (3) en défilement présentant à sa surface une couche d'oxyde au moyen d'au moins un laser de décapage (13), **caractérisée en ce qu'**elle comporte :

> - un ensemble de détermination (10) configuré pour déterminer, sur chacune d'une pluralité de sections successives du produit métallique (3) en défilement, un seuil de densité d'énergie d'expulsion de la couche d'oxyde, correspondant à une densité d'énergie minimale nécessaire à l'expulsion de la couche d'oxyde sur la section considérée, l'ensemble de détermination (10) comprenant :

>> un système d'émission (20) comprenant une source laser (30), le système d'émission (20) étant configuré pour émettre, sur une portion de ladite section considérée, des pulses laser d'analyse de longueur d'onde et de durée de pulse égales à celles du ou des lasers de décapage (13), pour former, au sein de ladite portion, une zone décapée dépourvue de la couche d'oxyde, un système d'acquisition d'images (22) configuré pour acquérir une image de la portion impactée par les pulses laser d'analyse, lors du défilement du produit, un système de traitement (24) configuré pour déterminer, à partir de chaque image acquise par le système d'acquisition d'images (22), une dimension représentative de la zone décapée et pour évaluer, à partir de ladite dimension représentative et d'informations relatives au profil en énergie des pulses laser d'analyse, le seuil de densité d'énergie d'expulsion de la couche d'oxyde,

> - un ensemble (12) de décapage laser comprenant au moins un laser de décapage (13) configuré pour émettre des pulses laser de décapage sur chacune de la pluralité de sections successives du produit métallique en défilement pour la décaper, et une unité de pilotage (15) configurée pour recevoir le seuil de densité d'énergie d'expulsion de la couche d'oxyde pour cette section considérée et pour commander l'émission, par le ou les lasers de décapage (13), de pulses laser d'énergie supérieure au seuil de densité d'énergie d'expulsion de la couche d'oxyde de telle sorte que chaque point de la section considérée soit exposé en au moins un instant à une densité d'énergie supérieure au seuil de densité d'énergie d'expulsion de l'oxyde.

12. Installation de décapage laser selon la revendication 11, dans laquelle les pulses laser d'analyse sont adaptés pour former, au sein de ladite portion, une zone endommagée, sur laquelle le métal sous-jacent à la couche d'oxyde a été endommagé par les pulses laser d'analyse, et le système de traitement (24) est configuré pour déterminer, à partir de ladite image, une dimension représentative de la zone endommagée et pour évaluer, à partir de la dimension représentative de la zone endommagée et des informations relatives au profil en énergie des pulses laser d'analyse, un seuil de densité d'énergie d'endommagement du métal, correspondant à la densité d'énergie au-dessus de laquelle une dégradation de la surface du produit métallique (3), sous la couche d'oxyde, est constatée.

13. Installation de décapage laser selon la revendication 12, **caractérisée en ce que** le système de traitement (24) est configuré pour transmettre au système d'émission (20) le seuil de densité d'énergie d'endommagement, et **en ce que** le système d'émission (20) est configuré pour adapter l'énergie du pulse laser d'analyse en fonction du seuil de densité d'énergie d'endommagement de telle sorte qu'en tout point de la portion impactée de la section suivante du produit en défilement, la densité d'énergie soit inférieure au seuil de densité d'énergie d'endommagement.

14. Installation de décapage laser selon l'une quelconque des revendications 11 à 13, dans laquelle, les informations relatives au profil en énergie comprenant la forme du profil en énergie et l'énergie ou la puissance des pulses laser d'analyse, l'installation de décapage laser comprend un système de détermination de la forme du profil en énergie des pulses laser d'analyse et/ou un système de détermination de l'énergie ou la puissance des pulses laser d'analyse.

15. Installation de décapage laser selon la revendication 14, dans laquelle le système de détermination de la forme du profil en énergie des pulses laser d'analyse comprend un analyseur de faisceau (64) et un dispositif optique (62), notamment une lame séparatrice, configuré pour dévier une partie de chaque pulse laser d'analyse vers l'analyseur de faisceau (64), l'analyseur de faisceau (64) étant configuré pour évaluer la forme du profil en énergie à partir de la partie du pulse laser d'analyse déviée.

16. Installation de décapage laser selon l'une quelconque des revendications 14 ou 15, dans laquelle le système de détermination de l'énergie ou de la puissance des pulses laser d'analyse comprend un puissancemètre et un dispositif optique (62), notamment une lame séparatrice, configuré pour dévier une partie de chaque pulse laser d'analyse vers le puissancemètre, le puissancemètre étant configuré pour évaluer l'énergie et/ou la puissance des pulses laser d'analyse à partir de la partie du pulse laser d'analyse déviée.

17. Installation de décapage selon l'une quelconque des revendications 11 à 13, dans laquelle, les informations relatives au profil en énergie comprenant la forme du profil en énergie et l'énergie ou la puissance des pulses laser d'analyse, l'installation de décapage laser comprend un système de détermination de la forme du profil en énergie et/ou de l'énergie ou la puissance de pulses lasers auxiliaires émis par le système d'émission (20), les pulses lasers auxiliaires étant distincts des pulses lasers d'analyse.

18. Installation de décapage selon l'une des revendications 11 à 17, **caractérisée en ce que**, pour traiter l'ensemble de la surface dudit produit métallique qui consiste en une bande, une barre, un tube, une feuille, une plaque ou un fil, elle comporte, répartis au voisinage dudit produit métallique (3), un groupe de sources laser (30) et un groupe de lasers de décapage (13).

**Patentansprüche**

1. Ablationsverfahren eines durchlaufenden Metallprodukts (3), das auf seiner Oberfläche eine Oxidschicht aufweist, wobei das Verfahren Laserablation mittels mindestens einem Ablationslaser (13) verwendet, das Verfahren umfassend die folgenden Schritte, die nacheinander an jedem Abschnitt einer Vielzahl von aufeinanderfolgenden Abschnitten des durchlaufenden Produkts durchgeführt werden:

   - Bestimmen eines Energiedichteschwellenwerts zum Entfernen der Oxidschicht auf dem jeweiligen Abschnitt des durchlaufenden Metallprodukts (3), der einer minimalen Energiedichte entspricht, die für das Entfernen der Oxidschicht auf dem jeweiligen Abschnitt erforderlich ist, umfassend:

      Emittieren von Analyselaserpulsen durch ein Emissionssystem (20), umfassend eine Laserquelle (30), wobei die Analyselaserpulse auf einem Abschnitt des jeweiligen Abschnitts von gleicher Wellenlänge und gleicher Pulsdauer wie die des oder der Ablationslaser (13) sind, um innerhalb des Abschnitts eine abgetragene Zone zu bilden, die frei von der Oxidschicht ist, Erfassen eines Bilds des Abschnitts der Oberfläche, auf den die Analyselaserpulse auftreffen,

   Bestimmen, anhand des Bilds, einer repräsentativen Dimension des angetragenen Bereichs, Bewerten, anhand der repräsentativen Dimension und Informationen in Bezug auf das Energieprofil der Analyselaserpulse, des Energiedichteschwellenwerts zum Entfernen der Oxidschicht,

   - Emittieren, durch den Ablationslaser (13), von Ablationslaserpulsen auf den jeweiligen Abschnitt, für die Ablation, wobei die Energiedichte der Ablationspulse höher ist als der bestimmte Energiedichteschwellenwert zum Entfernen der Oxidschicht,

   wobei der Ablationslaser (13) von einer Steuerungseinheit (15) gesteuert wird, die den bestimmten Energiedichteschwellenwert zum Entfernen der Oxidschicht empfängt, sodass jeder Punkt des jeweiligen Abschnitts in mindestens einem Moment einer Energiedichte ausgesetzt ist, die größer ist als der Energiedichteschwellenwert zum Entfernen der Oxidschicht.

2. Ablationsverfahren nach Anspruch 1, wobei die Emission der Analyselaserpulse innerhalb des Abschnitts einen beschädigten Bereich bildet, in dem das unter der Oxidschicht liegende Metall beschädigt wurde, und das Verfahren ferner die Bestimmung, anhand des Bilds, einer repräsentativen Abmessung des beschädigten Bereichs und die Bewertung, anhand der repräsentativen Abmessung des beschädigten Bereichs und Informationen in Bezug auf das Energieprofil der Analyselaserpulse, eines Beschädigung-Energiedichteschwellenwerts des Metalls umfasst, der der Energiedichte entspricht, oberhalb derer eine Beschädigung der Oberfläche des Metallprodukts (3) unterhalb der Oxidschicht festgestellt wird.

3. Ablationsverfahren nach Anspruch 2, **dadurch gekennzeichnet, dass** es ferner eine Übertragung des Beschädigung-Energiedichteschwellenwerts an das Emissionssystem (20) umfasst, und dass auf dem nächsten Abschnitt des durchlaufenden Metallprodukts (3) das Emissionssystem (20) einen Analyselaserpuls mit einer Energie aussendet, die angepasst ist, um an jedem Punkt des von den Analyselaserpulsen getroffenen Abschnitts die Energiedichte niedriger ist als der Beschädigung-Energiedichteschwellenwert.

4. Ablationsverfahren nach einem der Ansprüche 1 bis 3, wobei die Informationen in Bezug auf das Energieprofil die Form des Energieprofils und die Energie oder Leistung der Analyselaserpulse umfassen.

**5.** Ablationsverfahren nach Anspruch 4, wobei der Bestimmungsschritt des Energiedichteschwellenwerts zum Entfernen der Oxidschicht das Bestimmen der Form des Energieprofils der Analyselaserpulse und/oder das Bestimmen der Energie oder der Leistung der Analyselaserpulse umfasst.

**6.** Ablationsverfahren nach Anspruch 5, wobei der Bestimmungsschritt des Energiedichteschwellenwerts zum Entfernen der Oxidschicht das Bestimmen der Form des Energieprofils der Analyselaserpulse umfasst, umfassend das Ablenken eines Teils von jedem Analyselaserpuls zu einem Strahlanalysator (64) und das Auswerten der Form des Energieprofils durch den Strahlanalysator (64).

**7.** Ablationsverfahren nach einem der Ansprüche 5 oder 6, wobei der Bestimmungsschritt des Energiedichteschwellenwerts zum Entfernen der Oxidschicht das Bestimmen der Energie und/oder der Leistung der Analyselaserpulse umfasst, umfassend das Ablenken eines Teils von jedem Analyselaserpuls zu einem Leistungsmessgerät und das Auswerten der Energie und/oder Leistung des Analyselaserpulses durch das Leistungsmessgerät.

**8.** Ablationsverfahren nach Anspruch 4, wobei der Bestimmungsschritt des Energiedichteschwellenwerts zum Entfernen der Oxidschicht das Bestimmen der Form des Energieprofils und/oder der Energie oder Leistung von Hilfslaserpulsen umfasst, die von dem Emissionssystem (20) emittiert werden, wobei die Hilfslaserpulse von den Analyselaserpulsen verschieden sind.

**9.** Ablationsverfahren nach Anspruch 8, wobei die Bestimmung der Form des Energieprofils und/oder der Energie oder Leistung der Hilfslaserpulse Folgendes umfasst:

Emittieren von Hilfslaserpulsen durch das Emissionssystem (20),
Ausrichten der Hilfslaserpulsen auf einen Strahlanalysator (70) und/oder ein Leistungsmessgerät (72) mittels einer galvanometrischen Spiegelabtastvorrichtung (74),
Auswerten der Form des Energieprofils der Hilfslaserpulse durch den Strahlanalysator (64) und/oder Auswerten der Energie und/oder Leistung der Hilfslaserpulse durch das Leistungsmessgerät (72).

**10.** Ablationsverfahren nach einem der Ansprüche 1 bis 9, wobei das Metallprodukt (3) ein Band, eine Stange, ein Blatt, eine Platte, ein Rohr oder ein Draht ist.

**11.** Anlage zur Laserablation eines durchlaufenden Metallprodukts (3), das auf seiner Oberfläche eine Oxidschicht aufweist, mittels mindestens eines Ablationslasers (13), **dadurch gekennzeichnet, dass** sie Folgendes umfasst:

- eine Bestimmungsanordnung (10), die konfiguriert ist, um an jedem einer Vielzahl von aufeinanderfolgenden Abschnitten des durchlaufenden Metallprodukts (3) einen Energiedichteschwellenwert zum Entfernen der Oxidschicht zu bestimmen, die einer minimalen Energiedichte entspricht, die zum Entfernen der Oxidschicht auf dem jeweiligen Abschnitt erforderlich ist, die Bestimmungsanordnung (10) umfassend:

ein Emissionssystem (20), umfassend eine Laserquelle (30), wobei das Emissionssystem (20) konfiguriert ist, um über einen Abschnitt des jeweiligen Bereichs Analyselaserpulse mit einer Wellenlänge und einer Pulsdauer zu emittieren, die gleich wie die des oder der Ablationslaser (13) sind, um innerhalb des Abschnitts einen abgetragenen Bereich zu bilden, der frei von der Oxidschicht ist,
ein Bilderfassungssystem (22), das konfiguriert ist, um während des Durchlaufs des Produkts ein Bild des von den Analyselaserpulsen getroffenen Abschnitts zu erfassen,
ein Verarbeitungssystem (24), das konfiguriert ist, um aus jedem Bild, das von dem Bilderfassungssystem (22) erfasst wird, eine repräsentative Abmessung des abgetragenen Bereichs zu bestimmen, und um, anhand der repräsentativen Dimension und Informationen in Bezug auf das Energieprofil der Analyselaserpulse, den Energiedichteschwellenwert zum Entfernen der Oxidschicht zu bewerten,

- eine Anordnung (12) zur Laserablation, umfassend mindestens einem Ablationslaser (13), der konfiguriert ist, um Ablationslaserpulse auf jeden der Vielzahl von aufeinanderfolgenden Abschnitte des durchlaufenden Metallprodukts zu emittieren, um es abzutragen, und eine Steuerungseinheit (15), die konfiguriert ist, um den Energiedichteschwellenwert zum Entfernen der Oxidschicht für diesen jeweiligen Abschnitt zu empfangen und die Emission von Laserpulsen mit einer Energie, die größer ist als der Energiedichteschwellenwert zum Entfernen der Oxidschicht, durch den oder die Ablationslaser (13) zu steuern, sodass jeder Punkt des jeweiligen Abschnitts in mindestens einem Moment einer Energiedichte ausgesetzt ist, die größer ist als der Energiedichteschwellenwert zum Entfernen des Oxids.

12. Laserablationsanlage nach Anspruch 11, wobei die Laseranalysepulse angepasst sind, um innerhalb des Abschnitts einen beschädigten Bereich zu bilden, in dem das unter der Oxidschicht liegende Metall durch die Laseranalysepulse beschädigt wurde, und das Verarbeitungssystem (24) konfiguriert ist, um anhand des Bilds eine repräsentative Abmessung des beschädigten Bereichs zu bestimmen und anhand der repräsentativen Abmessung des beschädigten Bereichs und Informationen in Bezug auf das Energieprofil der Analyselaserpulse, einen Beschädigung-Energiedichteschwellenwert des Metalls, der der Energiedichte entspricht, oberhalb derer eine Beschädigung der Oberfläche des Metallprodukts (3) unterhalb der Oxidschicht festgestellt wird, zu bewerten

13. Laserablationsanlage nach Anspruch 12, **dadurch gekennzeichnet, dass** das Verarbeitungssystem (24) konfiguriert ist, um den Beschädigung-Energiedichteschwellenwert an das Emissionssystem (20) zu übertragen, und dass das Emissionssystem (20) konfiguriert ist, um die Energie des Analyselaserstrahls abhängig von dem Beschädigung-Energiedichteschwellenwert anzupassen, sodass an jedem Punkt des von den Analyselaserpulsen getroffenen Abschnitts des durchlaufenden Produkts die Energiedichte niedriger ist als der Beschädigung-Energiedichteschwellenwert.

14. Laserablationsanlage nach einem der Ansprüche 11 bis 13, wobei die Informationen in Bezug auf das Energieprofil die Form des Energieprofils und die Energie oder Leistung der Analyselaserpulse umfassen, die Laserablationsanlage ein System zum Bestimmen der Form des Energieprofils der Analyselaserpulse und/oder ein System zum Bestimmen der Energie oder der Leistung der Analyselaserpulse umfasst.

15. Laserablationsanlage nach Anspruch 14, wobei das System zum Bestimmen der Form des Energieprofils der Analyselaserpulse einen Strahlanalysator (64) und eine optische Vorrichtung (62), insbesondere eine Trennplatte, umfasst, die konfiguriert ist, um einen Teil von jedem Analyselaserpuls zu dem Strahlanalysator (64) hin abzulenken, wobei der Strahlanalysator (64) konfiguriert ist, um die Form des Energieprofils aus dem abgelenkten Teil des Analyselaserstrahls zu bewerten.

16. Laserablationsanlage nach einem der Ansprüche 14 oder 15, wobei das System zum Bestimmen der Energie oder Leistung der Analyselaserpulse ein Leistungsmessgerät und eine optische Vorrichtung (62), insbesondere eine Trennplatte, umfasst, die konfiguriert ist, um einen Teil jedes Analyselaserpulses zu dem Leistungsmessgerät hin abzulenken, wobei das Leistungsmessgerät konfiguriert ist, um die Energie und/oder die Leistung der Analyselaserpulse aus dem abgelenkten Teil des Analyselaserpulses zu bewerten.

17. Ablationsanlage nach einem der Ansprüche 11 bis 13, wobei die Informationen in Bezug auf das Energieprofil die Form des Energieprofils und die Energie oder Leistung der Analyselaserpulse umfassen, die Laserentfernungsanlage ein System zum Bestimmen der Form des Energieprofils und/oder der Energie oder Leistung von Hilfslaserpulsen umfasst, die von dem Emissionssystem (20) emittiert werden, wobei sich die Hilfslaserpulse von den Analyselaserpulsen unterscheiden.

18. Ablationsanlage nach einem der Ansprüche 11 bis 17, **dadurch gekennzeichnet, dass** sie zur Behandlung der gesamten Oberfläche des Metallprodukts, das aus einem Band, einer Stange, einem Rohr, einem Blatt, einer Platte oder einem Draht besteht, eine Gruppe von Laserquellen (30) und eine Gruppe von Ablationslasern (13) umfasst, die in der Nähe des Metallprodukts (3) verteilt sind.

**Claims**

1. A method for stripping a running metal product (3) presenting on its surface an oxide layer, said method using laser stripping by means of at least one stripping laser (13), the method comprising the following steps, implemented successively on each section of a plurality of consecutive sections of the running product:

   - determining an oxide layer removal energy density threshold on the section under consideration of said running metal product (3), corresponding to a minimum energy density necessary for removal of the oxide layer on the section under consideration, comprising:

     transmitting analysis laser pulses by an transmission system (20) comprising a laser source (30), the analysis laser pulses being of equal wavelength and pulse duration to those of the stripping laser or lasers (13), on a segment of said section under consideration, to form, within said segment, a stripped region devoid of the oxide layer, capturing an image of the segment of the surface impacted by said analysis laser pulses, determining, from said image, a dimension representative of the stripped region,

evaluating, from said representative dimension and information relative to the energy profile of the analysis laser pulses, of the oxide layer removal energy density threshold,

- transmitting by the stripping laser (13) stripping laser pulses on the section under consideration to strip it, the energy density of the stripping pulses being higher than the determined oxide layer removal energy density threshold,

the stripping laser (13) being controlled by a control unit (15) receiving the determined oxide layer removal energy density threshold, in such a way that each point of the section under consideration is exposed in at least one instant to an energy density higher than the oxide layer removal energy density threshold.

2. The stripping method according to claim 1, wherein transmitting the analysis laser pulses shapes, within said segment, a damaged region, on which the metal underlying the oxide layer has been damaged, and the method further comprises determining, from said image, a dimension representative of the damaged region and evaluating, from the dimension representative of the damaged region and the information relating to the energy profile of the analysis laser pulses, a metal damage energy density threshold, corresponding to the energy density above which degradation of the surface of the metal product (3), beneath the oxide layer, is observed.

3. The stripping method according to claim 2, **characterized in that** it further comprises transmitting the damage energy density threshold to the transmission system (20), and **in that**, on the next section of the running metal product (3), the transmission system (20) transmits an analysis laser pulse of energy adapted in such a way that at any point of the segment impacted by the analysis laser pulses, the energy density is lower than the damage energy density threshold.

4. The stripping method according to any one of claims 1 to 3, wherein the information relating to the energy profile comprises the shape of the energy profile and the energy or power of the analysis laser pulses.

5. The stripping method according to claim 4, wherein the step of determining the oxide layer removal energy density threshold comprises determining the shape of the energy profile of the analysis laser pulses and/or determining the energy or power of the analysis laser pulses.

6. The stripping method according to claim 5, wherein the step of determining the oxide layer removal energy density threshold comprises determining the energy profile shape of the analysis laser pulses, comprising diverting a portion of each analysis laser pulse to a beam analyzer (64) and evaluating the energy profile shape by the beam analyzer (64).

7. The stripping method according to any one of claims 5 or 6, wherein the step of determining the oxide layer removal energy density threshold comprises determining the energy and/or power of the analysis laser pulses, comprising diverting a portion of each analysis laser pulse toward a power meter, and evaluating the energy and/or power of the analysis laser pulses by the power meter.

8. The stripping method according to claim 4, wherein the step of determining the oxide layer removal energy density threshold comprises determining the shape of the energy profile and/or the energy or power of auxiliary laser pulses transmitted by the transmission system (20), the auxiliary laser pulses being distinct from the analysis laser pulses.

9. The stripping method according to claim 8, wherein the determination of the shape of the energy profile and/or the energy or power of the auxiliary laser pulses comprises:

transmission of the auxiliary laser pulses by the transmission system (20),
orientation of the auxiliary laser pulses toward a beam analyzer (70) and/or toward a power meter (72) by means of a galvanometer mirror scanning device (74),
evaluation of the shape of the energy profile of the auxiliary laser pulses by the beam analyzer (64) and/or evaluation of the energy and/or power of the auxiliary laser pulses by the power meter (72).

10. The stripping method according to any one of claims 1 to 9, wherein the metal product (3) is a strip, a bar, a sheet, a plate, a tube or a wire.

11. An apparatus for laser stripping of a running metal product (3) presenting on its surface an oxide layer by means of at least one stripping laser (13), **characterized in that** it comprises:

- a determination assembly (10) configured to determine, on each of a plurality of successive sections of the running metal product (3), an oxide layer removal energy density threshold, corresponding to a minimum energy density necessary for removal of the oxide layer on the section under consideration, the determination assembly (10) comprising:

a transmission system (20) comprising a laser source (30), the transmission system (20) being configured to transmit, on a segment of said section under consideration, the analysis laser pulses of wavelength and pulse duration equal to those of the stripping laser(s) (13), to form, within said segment, a stripped region devoid of the oxide layer,

an image acquisition system (22) configured to acquire an image of the segment impacted by the analysis laser pulses, during running of the product,

a treatment system (24) configured to determine, from each image acquired by the image acquisition system (22), a dimension representative of the stripped region and to evaluate, from said representative dimension and information relating to the energy profile of the analysis laser pulses, the oxide layer removal energy density threshold,

- an apparatus for laser stripping (12) comprising at least one stripping laser (13) configured to transmit the stripping laser pulses on each of the plurality of successive sections of the running metal product to strip it, and a control unit (15) configured to receive the oxide layer removal energy density threshold for that section and to control transmission, by the stripping laser(s) (13), of laser pulses of energy higher than the oxide layer removal energy density threshold, in such a way that each point of the section under consideration is exposed for at least one instant to an energy density higher than the oxide removal energy density threshold.

12. A laser stripping apparatus according to claim 11, wherein the analysis laser pulses are adapted to form, within said segment, a damaged region, on which the metal underlying the oxide layer has been damaged by the analysis laser pulses, and the treatment system (24) is configured to determine, from said image, a dimension representative of the damaged region and to evaluate, from the dimension representative of the damaged region and the information relating to the energy profile of the analysis laser pulses, a metal damage energy density threshold, corresponding to the energy density above which degradation of the surface of the metal product (3), beneath the oxide layer, is observed.

13. The laser stripping apparatus according to claim 12, **characterized in that** the treatment system (24) is configured to transmit the damage energy density threshold to the transmission system (20), and **in that** the transmission system (20) is configured to adapt the energy of the analysis laser pulse as a function of the damage energy density threshold in such a way that at any point of the impacted segment of the following section of the product in movement, the energy density is lower than the damage energy density threshold.

14. The laser stripping apparatus according to any one of claims 11 to 13, wherein, the information relating to the energy profile comprising the shape of the energy profile and the energy or power of the analysis laser pulses, the apparatus for laser stripping comprises a system for determining the shape of the energy profile of the analysis laser pulses and/or a system for determining the energy or power of the analysis laser pulses.

15. The laser stripping apparatus according to claim 14, wherein the system for determining the shape of the energy profile of the analysis laser pulses comprises a beam analyzer (64) and an optical device (62), in particular a beam splitter, configured to deflect a portion of each analysis laser pulse toward the beam analyzer (64), the beam analyzer (64) being configured to evaluate the shape of the energy profile from the deflected portion of the analysis laser pulse.

16. The laser stripping apparatus according to any one of claims 14 or 15, wherein the system for determining the energy or power of the analysis laser pulses comprises a power meter and an optical device (62), in particular a beam splitter, configured to deflect a portion of each analysis laser pulse toward the power meter, the power meter being configured to evaluate the energy and/or power of the analysis laser pulses from the deflected portion of the analysis laser pulse.

17. The stripping apparatus according to any one of claims 11 to 13, wherein, the information relating to the energy profile comprising the shape of the energy profile and the energy or power of the analysis laser pulses, the apparatus for laser stripping comprises a system for determining the shape of the energy profile and/or the energy or power of auxiliary laser pulses transmitted by the transmission system (20), the auxiliary laser pulses being distinct from the analysis laser pulses.

18. The stripping apparatus according to one of claims 11 to 17, **characterized in that**, in order to treat the entire surface of said metal product which consists of a strip, a bar, a tube, a sheet, a plate or a wire, it comprises, distributed in the vicinity of said metal product (3), a group of laser sources (30) and a group of stripping lasers (13)

FIG.1

$$\underline{FIG.2}$$

35

**FIG.3**

36

## FIG.4

$$\underline{FIG.5}$$

## FIG.6

57

58

56

55

Y

X

Z

## FIG.7

FIG.8

67

64

62

3

FIG.9

EP 4 377 042 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0927595 A1
- EP 3631049 A1
- KR 102272649 B1
- CN 107081312
- WO 2018096382 A
- EP 0509177 A2
- EP 0695808 A1

**Littérature non-brevet citée dans la description**

- **BORIS LUK'YANCHUK**. *Laser Cleaning*, December 2002, ISBN 978-981-02-4941-0